(19) Europäisches Patentamt / European Patent Office / Office européen des brevets

(11) **EP 4 725 922 A1**

(12) **EUROPEAN PATENT APPLICATION**
published in accordance with Art. 153(4) EPC

(43) Date of publication:
**15.04.2026 Bulletin 2026/16**

(21) Application number: **24819360.9**

(22) Date of filing: **05.06.2024**

(51) International Patent Classification (IPC):
$C03C\ 3/091$ (2006.01)    $C03C\ 3/093$ (2006.01)
$C03C\ 3/095$ (2006.01)    $C03C\ 13/00$ (2006.01)

(52) Cooperative Patent Classification (CPC):
**C03C 3/091; C03C 3/093; C03C 3/095; C03C 13/00**

(86) International application number:
**PCT/JP2024/020548**

(87) International publication number:
**WO 2024/253132 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.06.2023 JP 2023094429**

(71) Applicant: **NIPPON SHEET GLASS COMPANY,
LIMITED
Tokyo 108-6321 (JP)**

(72) Inventors:
• **FUJIWARA, Kosuke**
  **Tokyo 108-6321 (JP)**
• **NAKAMURA, Aya**
  **Tokyo 108-6321 (JP)**
• **KURAKAMI, Takuma**
  **Tokyo 108-6321 (JP)**

(74) Representative: **Cabinet Beau de Loménie
103, rue de Grenelle / CS 90800
75340 Paris Cedex 07 (FR)**

(54) **GLASS COMPOSITION, GLASS FIBER, AND GLASS FILLER**

(57) The present disclosure provides a glass composition having a low linear expansion coefficient and a high Young's modulus and suitable for mass production. The present disclosure provides: i) a glass composition containing, in mass%, $56 \leq SiO_2 \leq 70$, $0.1 \leq B_2O_3 \leq 8$, $15 \leq Al_2O_3 \leq 24$, $4 \leq MgO \leq 14$, $0 \leq CaO \leq 4$, $0 \leq ZnO \leq 10$, $0 \leq (Li_2O + Na_2O + K_2O) \leq 4$, and $0.1 \leq ZrO_2 \leq 5$, wherein the glass composition is substantially free of $TiO_2$; ii) a glass composition containing, in mass%, $56 \leq SiO_2 \leq 70$, $0.1 \leq B_2O_3 \leq 8$, $15 \leq Al_2O_3 \leq 24$, $4 \leq MgO \leq 14$, $0 \leq CaO \leq 4$, $0.1 \leq ZnO \leq 3$, and $0 \leq (Li_2O + Na_2O + K_2O) \leq 4$, wherein the glass composition is substantially free of $TiO_2$ and $ZrO_2$; and iii) a glass composition containing, in mass%, $56 \leq SiO_2 \leq 70$, $0.1 \leq B_2O_3 \leq 8$, $15 \leq Al_2O_3 \leq 24$, $4 \leq MgO \leq 14$, $0 \leq CaO \leq 4$, $0 \leq ZnO \leq 10$, $0 \leq (Li_2O + Na_2O + K_2O) \leq 4$, and $1 \leq ZrO_2 \leq 5$.

**EP 4 725 922 A1**

# EP 4 725 922 A1

**Description**

TECHNICAL FIELD

The present invention relates to a glass composition, also relates to a glass fiber and a glass filler, and further relates to a product such as a molded article including the glass fiber or the glass filler.

BACKGROUND ART

Resin compositions are widely used for forming electrically insulating members and mechanical members in electronic devices. Examples of the electrically insulating members include connector housings used for surface-mount technology (SMT), flexible printed circuits (FPCs), board-to-board, central processing unit (CPU) sockets, memory cards, edge connectors, optical connectors, and the like, reactance bobbins used for liquid crystal display (LCD) backlights, coils, flats, transformers, magnetic heads, and the like, switches used for relay cases, relay base switches, reflow DIP switches, tact switches, and the like, sensor cases, capacitor casings, volume casings, and trimmer casings. Examples of the mechanical members include lens holders and pickup bases for optical pickups, insulators and terminals for micromotors, and drums for laser printers. Resin compositions are also included in films such as base films for FPCs and base films for copper clad laminates. Some printed circuit boards mounted in electronic devices also include boards formed of resin compositions. Some printed wiring boards having no electronic parts installed yet also include boards formed of resin compositions. Hereinafter, in the present specification, printed circuit boards and printed wiring boards are collectively referred to as "printed boards".

A resin composition as described above includes a thermoplastic resin and a glass fiber and further includes a curing agent, a modifying agent, or the like, if necessary. A printed board may further include an inorganic filler. A glass filler may be used as the inorganic filler. In recent years, to meet the demand for reducing the size of electronic devices and the demand for reducing the thickness of electronic devices and thereby achieving high performance, resin compositions are required to have dimensional stability, and, accordingly, materials constituting the resin compositions are also required to have a low thermal expansion coefficient and a high elastic modulus. Patent Literature 1 discloses a glass composition having a low linear thermal expansion coefficient and a high Young's modulus, and a glass fiber formed of the glass composition.

The glass composition disclosed in the examples of Patent Literature 1 includes 0.7% or more and 3.0% or less of titanium oxide ($TiO_2$) on a mass basis together with $SiO_2$, $B_2O_3$, $Al_2O_3$, MgO, etc., and the content of zirconium oxide ($ZrO_2$) is limited to 0.6% or less. The glass composition disclosed in the examples of Patent Literature 2 includes 4.0% or more and 7.5% or less of zinc oxide (ZnO) on a mass basis together with $SiO_2$, $B_2O_3$, $Al_2O_3$, MgO, etc. Patent Literature 2 does not disclose a glass composition including zirconium oxide ($ZrO_2$). The linear thermal expansion coefficient of E-glass in a temperature range (50 to 200°C) disclosed in Patent Literature 2 is $53 \times 10^{-7}$/°C (Comparative Example 1 of Patent Literature 2), but the linear thermal expansion coefficient of E-glass in a slightly wider temperature range (50 to 350°C) described later is $60 \times 10^{-7}$/°C and slightly larger (Comparative Example 1 of the present application).

CITATION LIST

Patent Literature

| | |
|---|---|
| Patent Literature1: | JP 2011-105554 A |
| Patent Literature 2: | WO 2012/104999 A1 |

SUMMARY OF INVENTION

Technical Problem

As electronic devices become smaller in size and become thinner in order to achieve higher performance, resin compositions constituting electronic devices are required to have dimensional stability, and a glass fiber and a glass filler that are materials constituting the resin compositions are required to have a low linear thermal expansion coefficient and a high elastic modulus. An object of the present invention is to provide a novel glass composition having a low linear thermal expansion coefficient and a high Young's modulus and suitable for mass production.

Solution to Problem

The present invention provides a glass composition containing the following components, in mass%:

$$56 \leq SiO_2 \leq 70;$$

$$0.1 \leq B_2O_3 \leq 8$$

$$15 \leq Al_2O_3 \leq 24;$$

$$4 \leq MgO \leq 14;$$

$$0 \leq CaO \leq 4;$$

$$0 \leq ZnO \leq 10;$$

$$0 \leq (Li_2O + Na_2O + K_2O) \leq 4;$$

; and

$$0.1 \leq ZrO_2 \leq 5,$$

wherein
the glass composition is substantially free of $TiO_2$.

In another aspect, the present invention provides a glass composition containing the following components, in mass%:

$$56 \leq SiO_2 \leq 70;$$

$$0.1 \leq B_2O_3 \leq 8;$$

$$15 \leq Al_2O_3 \leq 24;$$

$$4 \leq MgO \leq 14;$$

$$0 \leq CaO \leq 4;$$

$$0.1 \leq ZnO \leq 3;$$

and

$$0 \leq (Li_2O + Na_2O + K_2O) \leq 4,$$

wherein
the glass composition is substantially free of $TiO_2$ and $ZrO_2$.

In yet another aspect, the present invention provides a glass composition containing the following components, in mass%:

$$56 \leq SiO_2 \leq 70;$$

$$0.1 \leq B_2O_3 \leq 8;$$

$$15 \leq Al_2O_3 \leq 24;$$

$$4 \leq MgO \leq 14;$$

$$0 \leq CaO \leq 4;$$

$$0 \leq ZnO \leq 10;$$

$$0 \leq (Li_2O + Na_2O + K_2O) \leq 4;$$

and

$$1 \leq ZrO_2 \leq 5.$$

The present invention can also be described as follows.

The present invention provides a glass composition containing the following components, in mass%:

$$56 \leq SiO_2 \leq 70;$$

$$0.1 \leq B_2O_3 \leq 8;$$

$$15 \leq Al_2O_3 \leq 24;$$

$$4 \leq MgO \leq 14;$$

$$0 \leq CaO \leq 4$$

; and

$$0 \leq (Li_2O + Na_2O + K_2O) \leq 4,$$

wherein
at least one selected from the group consisting of a) and c), or b) is satisfied,

a) further containing $0 \leq ZnO \leq 10$ and $0.1 \leq ZrO_2 \leq 5$, and being substantially free of $TiO_2$,
b) further containing $0.1 \leq ZnO \leq 3$ and being substantially free of $TiO_2$ and $ZrO_2$, and
c) further containing $0 \leq ZnO \leq 10$ and $1 \leq ZrO_2 \leq 5$.

Advantageous Effects of Invention

According to the present invention, a novel glass composition having a low linear thermal expansion coefficient and a high Young's modulus and suitable for mass production is provided.

DESCRIPTION OF EMBODIMENTS

Hereinafter, an embodiment of the present invention will be described, but the following description is not intended to limit the present invention to a specific embodiment. In this specification, the phrases "substantially free of" and "not substantially contained" mean that the content is less than 0.1 mass%, less than 0.05 mass%, less than 0.01 mass%, further less than 0.005 mass%, and particularly less than 0.003 mass%, and, in some cases, less than 0.001 mass%. The term "substantially" means that trace amounts of impurities originating from glass raw materials, production equipment, molding equipment, etc., are permitted to be contained. The term "main component" means a component having the largest content on a mass basis. "T-$Fe_2O_3$" means total iron oxide converted into iron(III) oxide ($Fe_2O_3$). "T-$SnO_2$" means total tin oxide converted into tin dioxide ($SnO_2$). "Alkali metal oxides" mean lithium oxide ($Li_2O$), sodium oxide ($Na_2O$), and potassium oxide ($K_2O$). The upper and lower limits of the content described below can be combined as desired. Hereinafter, a glass composition is sometimes referred to simply as glass, and a linear thermal expansion coefficient is sometimes referred to simply as linear expansion coefficient.

[Glass Composition]

<Components>

($SiO_2$)

$SiO_2$ is a component that forms the network of the glass and is a main component of the glass composition. In addition, $SiO_2$ is a component that adjusts the devitrification temperature and the viscosity during glass forming and is a component that improves the water resistance of the glass. Furthermore, $SiO_2$ is a component that lowers the linear expansion coefficient of the glass. $SiO_2$ is also a component that acts to lower the permittivity and the dielectric loss tangent. The $SiO_2$ content is 56 mass% or more and 70 mass% or less. The lower limit of the $SiO_2$ content can be 57 mass% or more, 58 mass% or more, 58.5 mass% or more, 59 mass% or more, 59.5 mass% or more, 60 mass% or more, or even 60.1 mass% or more. The upper limit of the $SiO_2$ content can be 68 mass% or less, 66 mass% or less, 65 mass% or less, 64 mass% or less, 63.5 mass% or less, 63 mass% or less, 62.5 mass% or less, 62 mass% or less, or even 61.9 mass% or less, and, in some cases, 61.8 mass% or less.

($B_2O_3$)

$B_2O_3$ is a component that forms the network of the glass. In addition, $B_2O_3$ is also a component that adjusts the devitrification temperature and the viscosity during glass forming. Meanwhile, an excessively high $B_2O_3$ content reduces the Young's modulus of the glass and increases the linear expansion coefficient of the glass. Furthermore, $B_2O_3$ is a component that acts to lower the permittivity and the dielectric loss tangent. The $B_2O_3$ content is 0.1 mass% or more and 8 mass% or less. The lower limit of the $B_2O_3$ content can be 0.5 mass% or more, 1 mass% or more, 1.5 mass% or more, 2 mass% or more, 2.5 mass% or more, 2.6 mass% or more, 2.7 mass% or more, 2.8 mass% or more, 2.9 mass% or more, 3 mass% or more, 3.1 mass% or more, 3.2 mass% or more, 3.3 mass% or more, or 3.4 mass% or more, and, in some cases, 3.5 mass% or more. The upper limit of the $B_2O_3$ content can be 7 mass% or less, 6 mass% or less, even 5.8 mass% or less, 5.5 mass% or less, 5 mass% or less, 4.5 mass% or less, 4.4 mass% or less, 4.3 mass% or less, 4.2 mass% or less, 4.1 mass% or less, 4.0 mass% or less, or 3.9 mass% or less, and, in some cases, 3.5 mass% or less. The $B_2O_3$ content may be 0.1 mass% or more and 6 mass% or less.

($Al_2O_3$)

$Al_2O_3$ is a component that forms the network of the glass. In addition, $Al_2O_3$ is also a component that adjusts the devitrification temperature and the viscosity during glass forming. Furthermore, $Al_2O_3$ is a component that improves the Young's modulus of the glass and is also a component that lowers the linear expansion coefficient of the glass. $Al_2O_3$ is also a component that adjusts the permittivity and the dielectric loss tangent of the glass. When the $Al_2O_3$ content is 15 mass% or more and 24 mass% or less, an increase in the devitrification temperature of the glass is reduced, and also, the melting point of the glass does not become excessively high and more uniform melting of raw materials is achieved. The lower limit of the $Al_2O_3$ content can be 16 mass% or more, 17 mass% or more, 18 mass% or more, 18.5 mass% or more, 19 mass% or more, 19.5 mass% or more, 20 mass% or more, 20.1 mass% or more, or even 20.5 mass% or more. The upper limit of the $Al_2O_3$ content can be 23.5 mass% or less, 23 mass% or less, 22.5 mass% or less, 22 mass% or less, even 21.8 mass% or less, or 21.5 mass% or less, and, in some cases, 21 mass% or less, 20.9 mass% or less, 20.8 mass% or less, 20.7 mass% or less, 20.6 mass% or less, or 20.5 mass% or less.

(MgO)

MgO is a component that adjusts the devitrification temperature and the viscosity during glass forming and is also a component that improves the Young's modulus of the glass. In addition, MgO is a component that adjusts the permittivity and the dielectric loss tangent of the glass. The MgO content is 4 mass% or more and 14 mass% or less. The lower limit of the MgO content can be 5 mass% or more, 6 mass% or more, 6.5 mass% or more, 7 mass% or more, 7.5 mass% or more, 8 mass% or more, 8.5 mass% or more, or even 9 mass% or more. The upper limit of the MgO content can be 13 mass% or less, 12 mass% or less, 11 mass% or less, 10 mass% or less, 9.5 mass% or less, 9 mass% or less, or 8.5 mass% or less, and, in some cases, 8 mass% or less.

(CaO)

CaO is an optional component. CaO is a component that adjusts the devitrification temperature and the viscosity during glass forming. Meanwhile, an excessively high CaO content reduces the Young's modulus of the glass and increases the linear expansion coefficient of the glass. The lower limit of the CaO content can be 0.05 mass% or more, 0.06 mass% or more, 0.07 mass% or more, 0.08 mass% or more, 0.09 mass% or more, or 0.1 mass% or more. The upper limit of the CaO content can be 4 mass% or less, 3 mass% or less, 2 mass% or less, 1.5 mass% or less, 1 mass% or less, 0.8 mass% or less, 0.6 mass% or less, 0.5 mass% or less, 0.4 mass% or less, 0.3 mass% or less, 0.2 mass% or less, or even 0.15 mass% or less. CaO may not necessarily be substantially contained.

(MgO + CaO)

With regard to the meltability and the formability of the glass, the value of the sum (MgO + CaO) of the MgO content and the CaO content can be important in some cases. From the viewpoint of obtaining meltability and formability suitable for glass production, the lower limit of (MgO + CaO) can be 4 mass% or more, 5 mass% or more, 6 mass% or more, 7 mass% or more, 8 mass% or more, 8.5 mass% or more, or even 9 mass% or more. The upper limit of (MgO + CaO) can be 14 mass% or less, 13 mass% or less, 12 mass% or less, 11 mass% or less, 10 mass% or less, 9.5 mass% or less, or 9 mass% or less, and, in some cases, 8.5 mass% or less, or even 8 mass% or less.

(MgO/CaO)

The value of the ratio (MgO/CaO) of the MgO content to the CaO content can also be important, in some cases, for adjusting the devitrification temperature and the viscosity during glass forming and further, the Young's modulus and the linear expansion coefficient of the glass. Here, the content is also on a mass basis. The lower limit of the (MgO/CaO) can be 30 or more, 50 or more, 80 or more, 90 or more, or even 95 or more, and, in some cases, 100 or more. The upper limit of (MgO/CaO) is not particularly limited, but can be 10000 or less, 1000 or less, or even 500 or less.

(SrO)

SrO is an optional component. SrO is a component that adjusts the devitrification temperature and the viscosity during glass forming. Meanwhile, an excessively high SrO content reduces the Young's modulus of the glass and increases the linear expansion coefficient of the glass. The upper limit of the SrO content can be 5 mass% or less, 4 mass% or less, 3 mass% or less, 2 mass% or less, 1 mass% or less, 0.5 mass% or less, or even 0.1 mass% or less. SrO may not necessarily be substantially contained.

(BaO)

BaO is also an optional component. BaO is a component that adjusts the devitrification temperature and the viscosity during glass forming. Meanwhile, an excessively high BaO content reduces the Young's modulus of the glass and increases the linear expansion coefficient of the glass. The upper limit of the BaO content can be 5 mass% or less, 4 mass% or less, 3 mass% or less, 2 mass% or less, 1 mass% or less, 0.5 mass% or less, or even 0.1 mass% or less. BaO may not necessarily be substantially contained.

(MgO + CaO + SrO + BaO)

With regard to the meltability and the formability of the glass, the value of the total (MgO + CaO + SrO + BaO) of the MgO content, the CaO content, the SrO content, and the BaO content can be important in some cases. From the viewpoint of obtaining meltability and formability suitable for glass production, the lower limit of (MgO + CaO + SrO + BaO) can be 4 mass% or more, 5 mass% or more, 6 mass% or more, 7 mass% or more, 8 mass% or more, 8.5 mass% or more, or even 9 mass% or more. The upper limit of (MgO + CaO + SrO + BaO) can be 14 mass% or less, 13 mass% or less, 12 mass% or less, 11 mass% or less, 10 mass% or less, 9.5 mass% or less, or 9 mass% or less, and, in some cases, 8.5 mass% or less, or even 8 mass% or less.

(ZnO, ZrO$_2$)

ZnO and ZrO$_2$ are each a component that adjusts the devitrification temperature and the viscosity during glass forming. In addition, ZnO and ZrO$_2$ are each a component that improves the Young's modulus of the glass and also a component that lowers the linear expansion coefficient of the glass. Furthermore, ZnO and ZrO$_2$ are each a component that adjusts the permittivity and the dielectric loss tangent of the glass. The sum (ZnO + ZrO$_2$) of the ZnO content and the ZrO$_2$ content can be adjusted to a range of 0.1 mass% or more and 15 mass% or less, from the viewpoint of controlling the devitrification temperature and the viscosity of the molten glass within ranges suitable for glass production while reducing an increase in devitrification temperature. This range is also suitable from the viewpoint of ensuring a low linear expansion coefficient and a high Young's modulus. The lower limit of (ZnO + ZrO$_2$) can be 0.5 mass% or more, 1 mass% or more, 1.1 mass% or more, 1.3 mass% or more, or even 1.5 mass% or more, and, in some cases, 2 mass% or more, 2.5 mass% or more, 3 mass% or more, or even more than 3 mass%. The upper limit of (ZnO + ZrO$_2$) can be 14 mass% or less, 13 mass% or less, 12 mass% or less, 11 mass% or less, less than 10 mass%, 9 mass% or less, 8 mass% or less, 7.5 mass% or less, 7 mass% or less, even 6.5 mass% or less, 6 mass% or less, 5.8 mass% or less, 5.5 mass% or less, or 5 mass% or less, and, in some cases, 4.5 mass% or less, 4 mass% or less, 3.5 mass% or less, 3 mass% or less, 2.5 mass% or less, or even 2 mass% or less. ZnO and ZrO$_2$ are optional components. In other words, the lower limit of the content of each of these components may be 0. (ZnO + ZrO$_2$) may be 0.1 mass% or more and 8 mass% or less.

The lower limit of the ZnO content can be 0.1 mass% or more, 0.5 mass% or more, 1 mass% or more, 1.1 mass% or more, 1.3 mass% or more, 1.5 mass% or more, 2 mass% or more, 2.1 mass% or more, 2.5 mass% or more, 3 mass% or more, or even 3.5 mass% or more. The upper limit of the ZnO content may be 10 mass% or less, 9 mass% or less, 8 mass% or less, 7.5 mass% or less, 7 mass% or less, 6.5 mass% or less, 6 mass% or less, 5.5 mass% or less, 5.3 mass% or less, 5.2 mass% or less, 5.1 mass% or less, 5 mass% or less, 4.5 mass% or less, 4 mass% or less, 3.5 mass% or less, 3 mass% or less, 2.9 mass% or less, 2.8 mass% or less, 2.7 mass% or less, 2.5 mass% or less, or even 2 mass% or less. Furthermore, ZnO may not necessarily be substantially contained.

The lower limit of the ZrO$_2$ content can be 0.1 mass% or more, 0.15 mass% or more, 0.2 mass% or more, 0.25 mass% or more, 0.3 mass% or more, 0.35 mass% or more, 0.4 mass% or more, 0.45 mass% or more, or even 0.5 mass% or more. The upper limit of the ZrO$_2$ content can be 5 mass% or less, 4 mass% or less, 3 mass% or less, 2 mass% or less, 1.5 mass% or less, 1.4 mass% or less, 1.2 mass% or less, or even 1 mass% or less. In particular, in a glass that is substantially free of TiO$_2$, the ZrO$_2$ content may be 1 mass% or less, 0.8 mass% or less, 0.7 mass% or less, or even 0.6 mass% or less. On the other hand, in a glass that includes TiO$_2$, the ZrO$_2$ content may be 1 mass% or more, 1.1 mass% or more, or even 1.2 mass% or more, and may be 5 mass% or less. Furthermore, regardless of the TiO$_2$ content, ZrO$_2$ may not necessarily be substantially contained. However, the ZrO$_2$ content suitable for achieving a low dielectric loss tangent is 0.7 mass% or more, or even 0.8 mass or more.

(B$_2$O$_3$ + ZnO + ZrO$_2$)

The value of the total (B$_2$O$_3$ + ZnO + ZrO$_2$) of the B$_2$O$_3$ content, the ZnO content, and the ZrO$_2$ content can be important for adjusting various properties, in some cases. Appropriate adjustment of (B$_2$O$_3$ + ZnO + ZrO$_2$) is effective for controlling the devitrification temperature and the viscosity of the molten glass within ranges suitable for glass production while reducing an excessive increase in devitrification temperature. The lower limit of (B$_2$O$_3$ + ZnO + ZrO$_2$) can be 0.1 mass% or more, 0.5 mass% or more, 1 mass% or more, 1.5 mass% or more, 2 mass% or more, 2.5 mass% or more, 3 mass% or more, 3.5 mass% or more, 4 mass% or more, or even 4.5 mass% or more, and, in some cases, 5 mass% or more. The upper limit of (B$_2$O$_3$ + ZnO + ZrO$_2$) can be 18 mass% or less, 16 mass% or less, 15 mass% or less, 14 mass% or less, 13 mass% or less, 12 mass% or less, 11 mass% or less, 10 mass% or less, 9 mass% or less, 8 mass% or less, 7 mass% or less, or even 6 mass% or less.

(MgO + ZnO)

The value of the sum (MgO + ZnO) of the MgO content and the ZnO content can also be important for adjusting various properties, in some cases. Appropriate adjustment of (MgO + ZnO) is effective for controlling the devitrification temperature and the viscosity of the molten glass within ranges suitable for glass production while reducing an excessive increase in devitrification temperature. The lower limit of (MgO + ZnO) can be 4 mass% or more, 5 mass% or more, 6 mass% or more, 7 mass% or more, 8 mass% or more, or even 9 mass% or more, and, in some cases, 10 mass% or more. The upper limit of (MgO + ZnO) can be 17 mass% or less, 16.5 mass% or less, 16 mass% or less, 15.5 mass% or less, 15 mass% or less, 14.5 mass% or less, 14 mass% or less, 13.8 mass% or less, or even 13.7 mass% or less.

(Li$_2$O, Na$_2$O, K$_2$O)

Alkali metal oxides (Li$_2$O, Na$_2$O, K$_2$O) are each a component that adjusts the devitrification temperature and the viscosity during glass forming. When the value of the total (Li$_2$O + Na$_2$O + K$_2$O) of the contents of the alkali metal oxides is 0 mass% or more and 4 mass% or less, the devitrification temperature and the viscosity of the molten glass can be controlled within ranges suitable for glass production while an excessive increase in devitrification temperature is reduced. Furthermore, an increase in the melting point of the glass can be reduced to achieve more uniform melting of glass raw materials, and at the same time a high thermal resistance of the glass can be ensured without an excessive decrease in glass transition temperature. The lower limit of (Li$_2$O + Na$_2$O + K$_2$O) can be 0.1 mass% or more, 0.15 mass% or more, 0.2 mass% or more, 0.25 mass% or more, or even 0.3 mass% or more. The addition of a small amount of the alkali metal oxides is effective for reducing bubbles in the glass. The upper limit of (Li$_2$O + Na$_2$O + K$_2$O) can be 3 mass% or less, 2 mass% or less, less than 2 mass%, 1.5 mass% or less, 1 mass% or less, less than 1 mass%, 0.9 mass% or less, 0.8 mass% or less, 0.7 mass% or less, 0.6 mass% or less, 0.5 mass% or less, 0.4 mass% or less, or 0.3 mass% or less. The alkali metal oxides may not necessarily be substantially contained. Li$_2$O, Na$_2$O, and K$_2$O are optional components. In other words, the lower limit of the content of each of these components may be 0.

The lower limit of the Li$_2$O content can be 0.1 mass% or more, or even 0.2 mass% or more. The upper limit of the Li$_2$O content can be 4 mass% or less, 3 mass% or less, 2 mass% or less, 1.5 mass% or less, 1 mass% or less, less than 1 mass%, 0.9 mass% or less, 0.8 mass% or less, 0.7 mass% or less, 0.6 mass% or less, 0.5 mass% or less, 0.4 mass% or less, 0.3 mass% or less, or even 0.2 mass% or less. Li$_2$O may not necessarily be substantially contained.

The upper limits and the lower limits of the Na$_2$O content and the K$_2$O content can be the values described as the upper limit and the lower limit of the Li$_2$O content, respectively. The sum (Na$_2$O + K$_2$O) of the Na$_2$O content and the K$_2$O content can be 4 mass% or less, 3 mass% or less, 2 mass% or less, less than 2 mass%, 1.5 mass% or less, 1 mass% or less, less than 1 mass%, 0.9 mass% or less, 0.8 mass% or less, 0.7 mass% or less, 0.6 mass% or less, 0.5 mass% or less, 0.4 mass% or less, 0.3 mass% or less, 0.2 mass% or less, or even 0.15 mass% or less, and, in some cases, 0.1 mass% or less. The lower limit of the content of (Na$_2$O + K$_2$O) may be 0.1 mass% or more, or even 0.2 mass% or more. Na$_2$O may not necessarily be substantially contained. K$_2$O also may not necessarily be substantially contained.

(TiO$_2$)

TiO$_2$ is a component that adjusts the devitrification temperature and the viscosity during glass forming. In addition, TiO$_2$ is a component that improves the Young's modulus of the glass and is also a component that lowers the linear expansion coefficient of the glass. Furthermore, TiO$_2$ is a component that improves the meltability and the chemical durability of the glass and that improves the ultraviolet absorption property of the glass. The lower limit of the TiO$_2$ content may be 0.1 mass% or more, 0.2 mass% or more, 0.3 mass% or more, 0.5 mass% or more, or 1 mass% or more, and, in some cases, 1.2 mass% or more. However, in order to adjust the Young's modulus, the linear expansion coefficient, and the suitability for mass production in a well-balanced manner, it is desirable not to contain an excessive amount of TiO$_2$. The upper limit of the TiO$_2$ content can be 5 mass% or less, 4 mass% or less, 3 mass% or less, 2 mass% or less, 1.5 mass% or less, 1.4 mass% or less, 1.3 mass% or less, 1 mass% or less, 0.5 mass% or less, 0.4 mass% or less, 0.3 mass% or less, 0.2 mass% or less, or even 0.1 mass% or less. TiO$_2$ may not necessarily be substantially contained.

(TiO$_2$ + ZrO$_2$)

The value of the sum (TiO$_2$ + ZrO$_2$) of the TiO$_2$ content and the ZrO$_2$ content can also be important, in some cases, for adjusting the devitrification temperature and the viscosity during glass forming and further, the Young's modulus and the linear expansion coefficient of the glass. The lower limit of (TiO$_2$ + ZrO$_2$) can be 0.1 mass% or more, 0.2 mass% or more, 0.3 mass% or more, or even 0.4 mass% or more, and, in some cases, 0.5 mass% or more. The upper limit of (TiO$_2$ + ZrO$_2$) can be 5 mass% or less, 4 mass% or less, 3.5 mass% or less, 3.3 mass% or less, 3 mass% or less, or 2.5 mass% or less, and, in some cases, 2 mass% or less, 1.5 mass% or less, 1.2 mass% or less, 1 mass% or less, 0.7 mass% or less, or even 0.6 mass% or less. However, depending on the embodiment, both TiO$_2$ and ZrO$_2$ may not necessarily be substantially contained.

(Fe)

In the glass, Fe is normally present in the form of Fe$^{2+}$ or Fe$^{3+}$. Fe$^{3+}$ is a component that enhances the ultraviolet absorption property of the glass, and Fe$^{2+}$ is a component that enhances the heat-ray absorption property of the glass. The upper limit of the Fe content can be, as expressed by T-Fe$_2$O$_3$, 5 mass% or less, 4 mass% or less, 3 mass% or less, 2 mass% or less, 1 mass% or less, 0.5 mass% or less, 0.4 mass% or less, or even 0.3 mass% or less. The lower limit of the Fe content can be, as expressed by T-Fe$_2$O$_3$, 0.1 mass% or more, 0.15 mass% or more, or even 0.2 mass% or more. In particular, in a glass composition having low alkali metal oxide contents, a small amount of iron oxide can promote refining of the glass and contribute to reducing bubbles. Fe may not necessarily be substantially contained.

(CeO$_2$, SnO$_2$)

CeO$_2$ and SnO$_2$ are optional components. In particular, in a glass composition having low alkali metal oxide contents, small amounts of CeO$_2$ and SnO$_2$ may contribute to promoting refining of the glass. CeO$_2$ and SnO$_2$ are each a component that adjusts the devitrification temperature and the viscosity during glass forming. In addition, CeO$_2$ and SnO$_2$ are each a component that improves the Young's modulus of the glass and also a component that lowers the linear expansion coefficient of the glass. Each of the upper limits of the CeO$_2$ content and the SnO$_2$ content may be 0.1 mass% or more. Each of the upper limits of the CeO$_2$ content and the SnO$_2$ content can be 2 mass% or less, 1 mass% or less, 0.5 mass% or less, 0.3 mass% or less, or even 0.2 mass% or less. CeO$_2$ may not necessarily be substantially contained. SnO$_2$ also may not necessarily be substantially contained. The SnO$_2$ content is a value expressed by T-SnO$_2$.

(SO$_3$)

SO$_3$ is also an optional component. A small amount of SO$_3$ can reduce bubbles remaining in the glass and contribute to improving the suitability of the glass for mass production. The lower limit of the SO$_3$ content may be 0.001 mass% or more, or even 0.002 mass% or more. The upper limit of the SO$_3$ content can be 0.5 mass% or less, 0.2 mass% or less, 0.1 mass% or less, 0.05 mass% or less, 0.04 mass% or less, 0.03 mass% or less, 0.02 mass% or less, or even 0.01 mass% or less. SO$_3$ may not necessarily be substantially contained.

(F$_2$, Cl$_2$)

Fluorine (F$_2$) and chlorine (Cl$_2$) are also optional components. In particular, in a glass composition having low alkali metal oxide contents, F$_2$ and Cl$_2$ can contribute to promoting refining of the glass. However, F$_2$ and Cl$_2$ are readily volatile and therefore may scatter when melted. Each of the upper limits of the F$_2$ content and the Cl$_2$ content can be 5 mass% or less, 4 mass% or less, 3 mass% or less, 2 mass% or less, 1 mass% or less, 0.5 mass% or less, 0.2 mass% or less, or even 0.1 mass% or less. F$_2$ may not necessarily be substantially contained. The lower limit of the F$_2$ content may be 0.1 mass% or more, 0.2 mass% or more, 0.3 mass% or more, 0.35 mass% or more, or even 0.4 mass% or more. Cl$_2$ also may not necessarily be substantially contained.

(Total of Components)

The total of the above components, that is, the components from SiO$_2$ to F$_2$ and Cl$_2$, can be 95 mass% or more, 97 mass% or more, or even 99 mass% or more, and, in some cases, 99.5 mass% or more. The lower limit of the total content of the components represented by (SiO$_2$ + B$_2$O$_3$ + Al$_2$O$_3$ + MgO + CaO + ZnO) may be 75 mass% or more, 85 mass% or less, 90 mass% or more, or even 95 mass% or more, and, in some cases, 97 mass% or more. The upper limit of the total content of the components represented by (SiO$_2$ + B$_2$O$_3$ + Al$_2$O$_3$ + MgO + CaO + ZnO) may be 99 mass% or less. The lower limit of the total content of the components represented by (Li$_2$O + Na$_2$O + K$_2$O + TiO$_2$ + ZrO$_2$ + T-Fe$_2$O$_3$) may be 0.5 mass% or more, 0.7 mass% or more, or even 1 mass% or more. The upper limit of the total content of the components represented by (Li$_2$O + Na$_2$O + K$_2$O + TiO$_2$ + ZrO$_2$ + T-Fe$_2$O$_3$) may be 19 mass% or less, 10 mass% or less, 5 mass% or less, or even 3 mass% or less.

(Other components)

Examples of other optional components include at least one selected from the group consisting of P$_2$O$_5$, HfO$_2$, Ga$_2$O$_3$, La$_2$O$_3$, Pr$_2$O$_3$, Nd$_2$O$_3$, Pm$_2$O$_3$, Sm$_2$O$_3$, Eu$_2$O$_3$, Gd$_2$O$_3$, Tb$_2$O$_3$, Dy$_2$O$_3$, Ho$_2$O$_3$, Er$_2$O$_3$, Tm$_2$O$_3$, Yb$_2$O$_3$, Lu$_2$O$_3$, WO$_3$, Nb$_2$O$_5$, Sc$_2$O$_3$, Y$_2$O$_3$, MoO$_3$, Ta$_2$O$_5$, MnO$_2$, Cr$_2$O$_3$, CuO, CoO, PbO, Bi$_2$O$_3$, Br$_2$, I$_2$, As$_2$O$_3$, and Sb$_2$O$_3$. However, the other optional components are not limited to these. The other optional components may each be contained in a content of 3 mass% or less. Each of the allowable contents of the other optional components can be 2 mass% or less, less than 2 mass%, less than 1 mass%, less than 0.5 mass%, or even 0.1 mass% or less. Each of the other optional components may not necessarily be substantially contained. Y$_2$O$_3$ and La$_2$O$_3$ are each a component that adjusts the devitrification temperature and the viscosity during glass forming. Also, Y$_2$O$_3$ and La$_2$O$_3$ are each a component that improves the Young's modulus of the glass. For example, the sum (Y$_2$O$_3$ + La$_2$O$_3$) of the Y$_2$O$_3$ content and the La$_2$O$_3$ content can be 5 mass% or less, less than 3 mass%, less than 2 mass%, less than 1 mass%, 0.9 mass% or less, less than 0.5 mass%, or even 0.1 mass% or less. For example, from the viewpoint of environmental protection, it is desirable that As$_2$O$_3$ and Sb$_2$O$_3$ should not be substantially contained. The total content of the other optional components listed above may be 5 mass% or less, less than 3 mass%, less than 2 mass%, less than 1 mass%, less than 0.5 mass%, or even 0.1 mass% or less.

<Preferred Compositions>

Preferred compositions are shown below. The range shown in parentheses for each component is a more preferred range.

(Composition A1)

A glass composition containing the following components, in mass%:

$$58 \leq SiO_2 \leq 64\ (58.5 \leq SiO_2 \leq 63);$$

$$1 \leq B_2O_3 \leq 6\ (1.5 \leq B_2O_3 \leq 5);$$

$$17 \leq Al_2O_3 \leq 23\ (18 \leq Al_2O_3 \leq 22);$$

$$4 \leq MgO \leq 13\ (7 \leq MgO \leq 12);$$

$$0 \leq CaO \leq 3\ (0 \leq CaO \leq 1);$$

$$1 \leq ZnO \leq 8\ (1.1 \leq ZnO \leq 7);$$

$$0 \leq (Li_2O + Na_2O + K_2O) \leq 3\ (0 \leq (Li_2O + Na_2O + K_2O) \leq 2);$$

and

$$0.2 \leq ZrO_2 \leq 4\ (0.3 \leq ZrO_2 \leq 3),$$

wherein
the glass composition is substantially free of $TiO_2$.
Composition A1 has a low linear thermal expansion coefficient and a high Young's modulus and also has excellent suitability for mass production. An example of excellent suitability for mass production is that $\Delta T$ determined by subtracting a devitrification temperature from a working temperature is a positive value.

(Composition A2)

A glass composition containing the following components, in mass%:

$$58.5 \leq SiO_2 \leq 62;$$

$$1.5 \leq B_2O_3 \leq 5;$$

$$18 \leq Al_2O_3 \leq 22;$$

$$7 \leq MgO \leq 12;$$

$$0 \leq CaO \leq 1;$$

$$1.1 \le ZnO \le 7;$$

$$0.1 \le (Li_2O + Na_2O + K_2O) \le 2;$$

and

$$0.3 \le ZrO_2 \le 3,$$

wherein

$$9 \le (MgO + ZnO) \le 13.8$$

is satisfied and the glass composition is substantially free of $TiO_2$.

Composition A2 has a low linear thermal expansion coefficient and a high Young's modulus and also has excellent suitability for mass production. An example of excellent suitability for mass production is a low working temperature and a large $\Delta T$. Here, a low working temperature is, for example, 1395°C or lower, and a large $\Delta T$ is, for example, 10°C or more.

(Composition B)

A glass composition containing the following components, in mass%:

$$58 \le SiO_2 \le 64 \ (58.5 \le SiO_2 \le 63);$$

$$1 \le B_2O_3 \le 6 \ (1.5 \le B_2O_3 \le 5);$$

$$17 \le Al_2O_3 \le 23 \ (18 \le Al_2O_3 \le 22);$$

$$4 \le MgO \le 13 \ (7 \le MgO \le 12);$$

$$0 \le CaO \le 3 \ (0 \le CaO \le 1);$$

$$0.5 \le ZnO \le 2.8 \ (1.1 \le ZnO \le 2.8);$$

and

$$0 \le (Li_2O + Na_2O + K_2O) \le 3 \ (0 \le (Li_2O + Na_2O + K_2O) \le 2),$$

wherein
the glass composition is substantially free of $TiO_2$ and $ZrO_2$.

Composition B is substantially free of $ZrO_2$, unlike Compositions A1, A2, and C. Composition B has a low linear thermal expansion coefficient and a high Young's modulus and also has excellent suitability for mass production.

(Composition C)

A glass composition containing the following components, in mass%:

$$58 \le SiO_2 \le 64 \ (58.5 \le SiO_2 \le 63);$$

$$1 \le B_2O_3 \le 6 \ (1.5 \le B_2O_3 \le 5);$$

$$17 \leq Al_2O_3 \leq 23 \ (18 \leq Al_2O_3 \leq 22);$$

$$4 \leq MgO \leq 13 \ (7 \leq MgO \leq 12);$$

$$0 \leq CaO \leq 3 \ (0 \leq CaO \leq 1);$$

$$1 \leq ZnO \leq 8 \ (1.1 \leq ZnO \leq 7);$$

$$0 \leq (Li_2O+Na_2O+K_2O) \leq 3 \ (0 \leq (Li_2O + Na_2O + K_2O) \leq 2);$$

$$0.1 \leq TiO_2 \leq 4 \ (0.3 \leq TiO_2 \leq 3);$$

and

$$1.1 \leq ZrO_2 \leq 4 \ (1.1 \leq ZrO_2 \leq 3).$$

Composition C contains both $TiO_2$ and $ZrO_2$, unlike Compositions A1, A2, and B. Composition C has a low linear thermal expansion coefficient and a high Young's modulus and also has excellent suitability for mass production. Composition C is also suitable for achieving a low dielectric loss tangent.

Compositions A1, A2, B, and C may further contain $0.1 \leq T\text{-}Fe_2O_3 \leq 3$ ($0.1 \leq T\text{-}Fe_2O_3 \leq 2$ as a more preferred range), and, together with $T\text{-}Fe_2O_3$ in this range, may further contain $0.001 \leq SO_3 \leq 0.5$ ($0.002 \leq SO_3 \leq 0.3$ as a more preferred range). Moreover, as described in the section <Components>, the upper limit and/or the lower limit of the content of each component can be changed for Compositions A1, A2, B, and C. Furthermore, as described in the section <Components>, the total of the components may be adjusted for Compositions A1, A2, B, and C, and Compositions A1, A2, B, and C may contain other components.

<Properties>

Properties that the glass composition of the present embodiment can have will be described below.

(Melting Properties)

A temperature at which the viscosity of the molten glass is 1000 dPa·sec (1000 poise) is called a working temperature of the glass and is a temperature suitable for shaping of the glass. When the working temperature of the glass is 1100°C or higher, variation in dimensions such as glass fiber diameter can be reduced. When the working temperature is 1450°C or lower, the fuel cost required for glass melting can be reduced, and a glass manufacturing apparatus is less likely to be thermally eroded, and accordingly, the life span of the apparatus is extended. The lower limit of the working temperature can be 1200°C or higher, 1300°C or higher, 1320°C or higher, 1330°C or higher, 1340°C or higher, or even 1350°C or higher. The upper limit of the working temperature can be 1420°C or lower, 1410°C or lower, 1400°C or lower, 1395°C or lower, 1390°C or lower, 1385°C or lower, 1382°C or lower, and even 1380°C or lower.

When a temperature difference ΔT determined by subtracting the devitrification temperature from the working temperature is greater, devitrification is less likely to occur during shaping of the glass, and consequently, a homogeneous glass can be produced in a higher yield rate. ΔT can be 0°C or more, 5°C or more, 10°C or more, or even 15°C or more. The upper limit of ΔT is not particularly limited, but is, for example, 100°C or less, 80°C or less, 70°C or less, 65°C or less, 60°C or less, 55°C or less, or even 50°C or less. The devitrification temperature is a temperature at which crystals form in the molten raw glass and begin to grow and can be measured by a method described below.

(Linear Expansion Coefficient)

The linear expansion coefficient is, to be precise, the average linear expansion coefficient at 50 to 350°C. The low linear expansion coefficient of the glass contributes to improving the dimensional stability of a resin composition including the glass. The lower limit of the linear expansion coefficient can be $20 \times 10^{-7}/°C$ or more, $25 \times 10^{-7}/°C$ or more, $26 \times 10^{-7}/°C$ or more, or even $27 \times 10^{-7}/°C$ or more. The upper limit of the linear expansion coefficient can be $35 \times 10^{-7}/°C$ or less, $34 \times 10^{-7}/°C$ or less, $33 \times 10^{-7}/°C$ or less, or even $32 \times 10^{-7}/°C$ or less, and, in some cases, $31 \times 10^{-7}/°C$ or less.

(Glass Transition Temperature)

The glass transition temperature (glass transition point) is an index of the thermal resistance of the glass. When a resin composition containing the glass is subjected to heat treatment, a high glass transition temperature is desirable. The lower limit of the glass transition temperature can be 650°C or higher, 700°C or higher, 710°C or higher, 720°C or higher, or even 730°C or higher. The upper limit of the glass transition temperature can be 800°C or lower, 790°C or lower, 780°C or lower, or even 770°C or lower.

(Young's Modulus)

The high Young's modulus of the glass contributes to improving the mechanical properties and the dimensional stability of a resin composition including a fiber or filler of the glass. The Young's modulus can be calculated from the longitudinal wave velocity and the transverse wave velocity of elastic waves propagating through the glass, measured by a conventional ultrasonic method, and the density of the glass measured by the Archimedes method. The lower limit of the Young's modulus can be 85 GPa or more, 86 GPa or more, 87 GPa or more, 88 GPa or more, 89 GPa or more, or even 90 GPa or more. The upper limit of the Young's modulus can be 100 GPa or less, or can be 99 GPa or less, 98 GPa or less, 97 GPa or less, 96 GPa or less, or even 95 GPa or less.

(Permittivity, Dielectric Loss Tangent)

The low permittivity of the glass contributes to improving the dielectric properties of a resin composition including a fiber or filler of the glass. The permittivity at a measurement frequency of 1 GHz is 6.5 or less, 6.4 or less, 6.3 or less, 6.2 or less, 6.1 or less, 6.0 or less, 5.9 or less, 5.8 or less, 5.7 or less, 5.6 or less, 5.5 or less, or even 5.4 or less, and, in some cases, 5.3 or less. The term "permittivity" refers to "relative permittivity" (dielectric constant) in a strict sense. Herein, "relative permittivity" is expressed simply as "permittivity", as is conventional. The permittivity is determined at room temperature (25°C). The permittivity may be 5.0 or more.

The low dielectric loss tangent of the glass also contributes to improving the dielectric properties of a resin composition including a fiber or filler of the glass. The dielectric loss tangent at a measurement frequency of 1 GHz is 0.0060 or less, 0.0055 or less, 0.0050 or less, 0.0045 or less, 0.0044 or less, 0.0043 or less, 0.0042 or less, 0.0041 or less, 0.0040 or less, 0.0039 or less, 0.0038 or less, 0.0037 or less, 0.0036 or less, 0.0035 or less, 0.0034 or less, 0.0033 or less, 0.0032 or less, 0.0031 or less, 0.0030 or less, even 0.0029 or less, 0.0028 or less, 0.0027 or less, 0.0026 or less, 0.0025 or less, 0.0024 or less, 0.0023 or less, 0.0022 or less, 0.0021 or less, or 0.0020 or less, and, in some cases, 0.0019 or less, 0.0018 or less, 0.0017 or less, 0.0016 or less, or 0.0015 or less. The dielectric loss tangent is a value at room temperature (25°C). The dielectric loss tangent may be 0.0010 or more.

[Glass Products]

<Glass Fiber>

A glass fiber of the present embodiment is formed of the above-described glass composition. According to the present embodiment, even when the fiber diameter is small, the occurrence of devitrification and the inclusion of bubbles in the glass fiber can be further suppressed, and therefore the glass fiber of the present embodiment can be a glass fiber having a small fiber diameter.

The average fiber diameter of the glass fiber is, for example, 0.1 to 50 μm. The average fiber diameter may be 0.1 μm or more, 0.2 μm or more, 0.3 μm or more, 0.4 μm or more, 0.5 μm or more, 1 μm or more, 2 μm or more, or even 3 μm or more, and may be 50 μm or less, 40 μm or less, 30 μm or less, 25 μm or less, 20 μm or less, 15 μm or less, 10 μm or less, 8 μm or less, 6 μm or less, 5 μm or less, 4.6 μm or less, or even 4.3 μm or less. A glass composition having a characteristic temperature suitable for mass production is suitable for stable production as a thin glass fiber. In a preferred embodiment, the average fiber diameter is even smaller, and is, for example, 3.9 μm or less, or even 3.5 μm or less. The glass fiber is, for example, a long glass fiber (filament).

The glass fiber may have at least one shape selected from the group consisting of roving, roving cloth, continuous strand mat, milled fiber, flat fiber, filament mat, chopped strand, yarn, glass cloth, and glass tape.

The flat fiber has a shape obtained by cutting a glass fiber whose cross-section has a flattened shape such as an elliptical shape. A major axis D2 is longer than a minor axis D1 in a cross-section of the flat fiber, and D2/D1 is, for example, 1.2 or more. The minor axis D1 is, for example, 0.5 to 25 μm. The major axis D2 is, for example, 0.6 to 300 μm. The flat fiber has a length L of, for example, 10 to 100000 μm. The flat fiber can be obtained by a known method. The cross-sectional shape of the flat fiber may be a recessed shape in which a surface extending along the major axis D2 recedes in a central portion with respect to end portions.

The glass fiber can be produced by a method including a step of melting the glass composition of the present embodiment and a step of shaping the molten glass composition into a glass fiber.

<Glass Filler>

A glass filler of the present embodiment is formed of the above-described glass composition. The glass filler can be at least one selected from the group consisting of a flaky glass, a glass powder, a glass bead, and a fine flake.

The flaky glass is also called scaly glass and has the shape of a flake. The flaky glass has an average particle diameter of, for example, 0.2 to 15000 $\mu$m. The flaky glass has an aspect ratio of, for example, 2 to 1000. The aspect ratio can be determined by dividing the average particle diameter by the average thickness. The average thickness can be determined by measuring 100 or more flaky glasses for their thicknesses t using a scanning electron microscope (SEM) and calculating the average thereof. The average particle diameters of the flaky glass and other glass fillers can each be defined as a particle diameter (D50) at a cumulative volume percentage of 50% in a particle size distribution measured by a laser diffraction scattering method. The flaky glass can be obtained by a known blow process, cup process, or the like.

The glass powder is powdery glass, and is manufactured by crushing glass. The glass powder has an average particle diameter of, for example, 1 to 500 $\mu$m. The particle diameter of the glass powder is defined as the diameter of a sphere having the same volume as a particle of the glass powder. The glass powder can be obtained by a known method.

The glass bead has a spherical shape or an approximately spherical shape. The glass bead has an average particle diameter of, for example, 1 to 500 $\mu$m. The particle diameter of the glass bead is defined as the diameter of a sphere having the same volume as a particle of the glass bead. The glass bead can be obtained by a known method.

The fine flake is a thin glass and is a thin flaky glass. The fine flake may be composed of, for example, flaky glasses having an average thickness of 0.1 to 2.0 $\mu$m. Alternately, for example, flaky glasses having a thickness of 0.01 to 2.0 $\mu$m may account for 90 mass% or more of the fine flake. The fine flake having such a small average thickness and having a small variation in thickness exhibits a high effect of reinforcing a resin and also exhibits an excellent effect of decreasing the mold shrinkage factor of the resin. The fine flake is suitable also for making limitations on, for example, the thickness of a resin molded article less strict than before. It is preferable that the fine flake be composed of flaky glasses having an average thickness of 0.1 to 1.0 $\mu$m. It is preferable that the flaky glasses having a thickness of 0.05 to 1.0 $\mu$m account for 90 mass% or more of the fine flake. The fine flake can be obtained by the method described for the flaky glass.

The glass filler can be produced by a method including a step of melting the glass composition of the present embodiment and a step of shaping the molten glass composition into a glass filler.

[Product Including Glass Fiber and/or Glass Filler]

The glass fiber and the glass filler of the present embodiment can be used in various products, examples of which are given below. The various products have aspects as molded articles, filler-containing products, resin products, etc.

<Molded Article>

A molded article of the present embodiment includes the above-described glass fiber and is an article molded into a predetermined shape. The molded article can be at least one selected from the group consisting of, but not limited to, a rubber reinforcing cord, a nonwoven fabric, a prepreg, a reinforced plastic, a printed board, an inorganic cured body, a filter, a heat insulating material, a sound absorbing material, and a battery separator.

<Filler-Containing Product>

A filler-containing product of the present embodiment includes the above-described glass filler. The filler-containing product can be at least one selected from the group consisting of, but not limited to, a reinforced plastic, a paint, an ink, a printed board, an inorganic cured body, and a cosmetic.

<Resin Product>

A resin product of the present embodiment includes the above-described glass fiber and/or glass filler and a resin. The resin product can be an electrically insulating member or a mechanical member. Examples of these members are as described above. The resin may be a thermoplastic resin. The thermoplastic resin is not particularly limited, and examples thereof include polyvinyl chloride, polypropylene, polyethylene, polystyrene, polyester, polyamide, polycarbonate, polybutylene, polybutylene terephthalate, and copolymers thereof. The use of polybutylene terephthalate enhances a warpage reducing effect and a dimensional stability improving effect on a molded product made by mixing polybutylene terephthalate with the glass filler. The flaky glass, the flat fiber, and the fine flake have relatively large specific surface areas and are suitable for ensuring the adhesive force with the thermoplastic resin.

[Techniques Provided by Present Embodiment]

The techniques provided by the present embodiment are as follows.

(Technique 1)

A glass composition containing the following components, in mass%:

$$56 \leq SiO_2 \leq 70;$$

$$0.1 \leq B_2O_3 \leq 8$$

$$15 \leq Al_2O_3 \leq 24;$$

$$4 \leq MgO \leq 14;$$

$$0 \leq CaO \leq 4;$$

$$0 \leq ZnO \leq 10;$$

$$0 \leq (Li_2O + Na_2O + K_2O) \leq 4;$$

and

$$0.1 \leq ZrO_2 \leq 5,$$

wherein
the glass composition is substantially free of $TiO_2$.

(Technique 2)

A glass composition containing the following components, in mass%:

$$56 \leq SiO_2 \leq 70;$$

$$0.1 \leq B_2O_3 \leq 8;$$

$$15 \leq Al_2O_3 \leq 24;$$

$$4 \leq MgO \leq 14;$$

$$0 \leq CaO \leq 4;$$

$$0.1 \leq ZnO \leq 3;$$

and

$$0 \leq (Li_2O + Na_2O + K_2O) \leq 4,$$

wherein
the glass composition is substantially free of $TiO_2$ and $ZrO_2$.

(Technique 3)

A glass composition containing the following components, in mass%:

$$56 \leq SiO_2 \leq 70;$$

$$0.1 \leq B_2O_3 \leq 8;$$

$$15 \leq Al_2O_3 \leq 24;$$

$$4 \leq MgO \leq 14;$$

$$0 \leq CaO \leq 4;$$

$$0 \leq ZnO \leq 10;$$

$$0 \leq (Li_2O + Na_2O + K_2O) \leq 4;$$

and

$$1 \leq ZrO_2 \leq 5.$$

(Technique 4)

The glass composition according to any one of Techniques 1 to 3, further containing $75 \leq (SiO_2 + B_2O_3 + Al_2O_3 + MgO + CaO + ZnO) \leq 99$ in mass%.

(Technique 5)

The glass composition according to any one of Techniques 1 to 4, further containing $1 \leq (ZnO + ZrO_2) \leq 15$ in mass%.

(Technique 6)

The glass composition according to any one of Techniques 1 to 5, further containing $1 \leq (Li_2O + Na_2O + K_2O + TiO_2 + ZrO_2 + T\text{-}Fe_2O_3) \leq 19$ in mass%,
where $T\text{-}Fe_2O_3$ is total iron oxide converted into $Fe_2O_3$.

(Technique 7)

The glass composition according to any one of Techniques 1 to 6, further containing $2 \leq B_2O_3 \leq 6$ in mass%.

(Technique 8)

The glass composition according to any one of Techniques 1 to 7, further containing $5 \leq MgO \leq 13$ in mass%.

(Technique 9)

The glass composition according to Technique 8, further containing $0 \leq CaO \leq 1$ in mass%.

(Technique 10)

The glass composition according to any one of Techniques 1 to 9, being substantially free of SrO.

(Technique 11)

The glass composition according to any one of Techniques 1 to 10, being substantially free of BaO.

(Technique 12)

The glass composition according to any one of Techniques 1 or 11, further containing $0 \leq ZnO \leq 8$ in mass%.

(Technique 13)

The glass composition according to any one of Techniques 1 to 12, further containing $4 \leq (MgO + ZnO) \leq 17$ in mass%.

(Technique 14)

The glass composition according to any one of Techniques 1 to 13, further containing $0 \leq (Li_2O + Na_2O + K_2O) \leq 1$ in mass%.

(Technique 15)

The glass composition according to Technique 14, further containing $0.1 \leq (Li_2O + Na_2O + K_2O) \leq 1$ in mass%.

(Technique 16)

The glass composition according to any one of Techniques 1 to 15, further containing $0 \leq (Na_2O + K_2O) \leq 1$ in mass%.

(Technique 17)

The glass composition according to any one of Techniques 1 or 16, further containing $0 \leq (TiO_2 + ZrO_2) \leq 4$ in mass%.

(Technique 18)

The glass composition according to any one of Techniques 1 to 17, further containing $0 \leq T\text{-}Fe_2O_3 \leq 5$ in mass%, where $T\text{-}Fe_2O_3$ is total iron oxide converted into $Fe_2O_3$.

(Technique 19)

The glass composition according to any one of Techniques 1 to 18, further containing $0 \leq Y_2O_3 \leq 3$ in mass%.

(Technique 20)

The glass composition according to any one of Techniques 1 to 19, further containing $0 \leq T\text{-}SnO_2 \leq 2$ in mass%, where $T\text{-}SnO_2$ is total tin oxide converted into $SnO_2$.

(Technique 21)

The glass composition according to any one of Techniques 1 to 20, further containing $0 \leq CeO_2 \leq 2$ in mass%.

(Technique 22)

The glass composition according to any one of Techniques 1 to 21, further containing $0 \leq F_2 \leq 5$ in mass%.

(Technique 23)

The glass composition according to any one of Techniques 1 to 22, further containing $0 \leq SO_3 \leq 0.5$ in mass%.

(Technique 24)

The glass composition according to any one of Techniques 1 to 23, wherein when a temperature at which a viscosity of the glass composition is 1000 dPa•sec is defined as a working temperature, the working temperature is 1450°C or lower.

(Technique 25)

The glass composition according to any one of Techniques 1 to 24, wherein when a temperature at which a viscosity of the glass composition is 1000 dPa•sec is defined as a working temperature, a temperature difference $\Delta T$ determined by subtracting a devitrification temperature from the working temperature is 0°C or more.

(Technique 26)

The glass composition according to any one of Techniques 1 to 25, having a Young's modulus of 85 to 100 GPa.

(Technique 27)

The glass composition according to any one of Techniques 1 to 26, having an average linear expansion coefficient of 20 to $35 \times 10^{-7}/°C$ at 50 to 350°C.

(Technique 28)

The glass composition according to any one of Techniques 1 to 27, having a permittivity of 6.5 or less at a frequency of 1 GHz.

(Technique 29)

The glass composition according to any one of Techniques 1 to 28, having a dielectric loss tangent of 0.0060 or less at a frequency of 1 GHz.

(Technique 30)

A glass fiber including the glass composition according to any one of Techniques 1 to 29.

(Technique 31)

The glass fiber according to Technique 30, having at least one shape selected from the group consisting of roving, roving cloth, continuous strand mat, milled fiber, flat fiber, filament mat, chopped strand, yarn, glass cloth, and glass tape.

(Technique 32)

A glass filler including the glass composition according to any one of Techniques 1 to 29.

(Technique 33)

The glass filler according to Technique 32, being at least one selected from the group consisting of a flaky glass, a glass powder, a glass bead, and a fine flake.

(Technique 34)

A molded article including the glass fiber according to Technique 30, wherein
the molded article is at least one selected from the group consisting of a rubber reinforcing cord, a nonwoven fabric, a prepreg, a reinforced plastic, a printed board, an inorganic cured body, a filter, a heat insulating material, a sound absorbing material, and a battery separator.

(Technique 35)

A filler-containing product including the glass filler according to Technique 32, wherein
the filler-containing product is at least one selected from the group consisting of a reinforced plastic, a paint, an ink, a printed board, an inorganic cured body, and a cosmetic.

(Technique 36)

A method for producing a glass fiber, the method including: a step of melting the glass composition according to any one of Techniques 1 to 29; and a step of shaping the molten glass composition into a glass fiber.

(Technique 37)

A method for producing a glass filler, the method including: a step of melting the glass composition according to any one of Techniques 1 to 29; and a step of shaping the molten glass composition into a glass filler.

EXAMPLES

Hereinafter, the embodiment of the present invention will be described in more detail by Examples and Comparative Examples.

(Examples and Comparative Examples)

Common glass raw materials such as silica sand were blended according to each composition shown in Tables 1 to 4 to prepare glass raw material batches for Examples and Comparative Examples. Each batch was molten by heating it to 1500 to 1600°C using an electric furnace, and was kept molten for about 4 hours until the composition became uniform. After that, part of the molten glass (glass melt) was poured onto an iron plate, and was slowly cooled to room temperature in an electric furnace. A glass composition (sheet-shaped body; glass specimen) as a bulk was obtained in this manner. In Examples 16, 28, and 35 to 37 and Comparative Example 3, tin (IV) oxide ($SnO_2$) was used as an $SnO_2$ source. In Examples 17, 19, 38, and 39, cerium (IV) oxide ($CeO_2$) was used as a $CeO_2$ source. In Examples 19 to 23, 29, 31 to 36, and 38 to 42, sodium sulfate was used as an $SO_3$ source, and in Examples 26 and 37, lithium sulfate monohydrate was used as an $SO_3$ source.

The methods for evaluating the properties will be explained below.

(Working Temperature)

For each obtained glass composition, the relationship between viscosity and temperature was examined by a common platinum ball-drawing method, and the working temperature was determined from the examination result. The platinum ball-drawing method is a method for measuring the viscosity of molten glass by dipping a platinum ball in the molten glass, drawing the platinum ball upward at a uniform velocity, determining the relationship between the load (friction) during the upward drawing of the platinum ball and the gravity, buoyancy, etc. acting on the platinum ball, and applying the determined relationship to the Stokes' law which states the relationship between the viscosity of a fluid and the fall velocity at which a small particle settles down in the fluid.

(Devitrification Temperature)

Each glass composition crushed to a particle diameter of 1.0 to 2.8 mm was put in a platinum boat. The glass composition in the boat was left in an electric furnace with a temperature gradient (900 to 1500°C) for 2 hours. The devitrification temperature of the glass composition was determined from the maximum temperature of the electric furnace at a location where a crystal appeared. In the case where the glass turned cloudy and no crystal was able to be observed, the maximum temperature of the electric furnace at a location where the cloudiness appeared was defined as the devitrification temperature. Here, the particle diameter is a value measured by sieving. It should be noted that varying temperatures at different places in the electric furnace (a temperature distribution in the electric furnace) was measured in advance, and the glass composition placed at a given place in the electric furnace was heated at the temperature measured in advance for the given place. The temperature difference $\Delta T$ is determined by subtracting the devitrification temperature from the working temperature.

(Linear Expansion Coefficient)

The average linear expansion coefficient of each obtained glass composition was measured at 50 to 350°C using a commercially available dilatometer (Rigaku Corporation, thermomechanical analyzer, TMA8510). In addition, a glass transition temperature $T_g$ was obtained based on a thermal expansion curve obtained from the TMA device.

(Young's Modulus)

A Young's modulus E was obtained from a longitudinal wave velocity vl and a transverse wave velocity vt of elastic waves propagating through the glass, measured by a conventional ultrasonic method, and a density $\rho$ of the glass separately measured by the Archimedes method, using the formula of $E = 3\rho \cdot vt^2 \cdot (v_l^2 - 4/3 \cdot v_t^2)/(v_l^2 - v_t^2)$.

(Permittivity, Dielectric Loss Tangent)

The permittivity and the dielectric loss tangent at a frequency of 1 GHz were measured using a permittivity measuring apparatus by cavity resonator perturbation. The measurement temperature was 25°C, and measurement samples were each a rectangular parallelepiped having a height of 100 mm and a square base 1.5 mm on a side.

(Number of Bubbles)

Common glass raw materials such as silica sand were blended to prepare glass raw material batches for Examples and Comparative Examples. In an electric furnace, 150 g of each batch was molten by heating it at 1600°C, which was a test temperature, and was kept molten for 2 hours until the composition became uniform. After that, part of the molten glass (glass melt) was poured onto an iron plate, and was slowly cooled to room temperature in an electric furnace. A glass specimen was obtained in this manner. The number of bubbles in this glass specimen was observed using an optical microscope, and the number of bubbles per 100 g of the glass was determined. "A" represents a glass specimen having less than 400 bubbles in 100 g of the glass, "B" represents a glass specimen having 400 or more and less than 2000 bubbles in 100 g of the glass, "C" represents a glass specimen having 2000 or more and less than 10000 bubbles in 100 g of the glass, and "D" represents a glass specimen having 10000 or more bubbles in 100 g of the glass.

The measurement results are shown in Tables 1 to 4. The glass compositions in the tables are all expressed in mass%. In addition, $Fe_2O_3$ and $SnO_2$ in the tables represent $T-Fe_2O_3$ and $T-SnO_2$, respectively.

[Table 1]

| Components (mass%) and properties | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|---|---|---|---|---|
| $SiO_2$ | 61.96 | 62.46 | 62.12 | 61.02 | 63.16 | 61.29 | 62.15 | 62.28 | 61.03 | 58.97 | 60.89 | 61.68 | 59.24 | 61.54 | 60.44 | 62.34 |
| $B_2O_3$ | 3.26 | 3.26 | 3.25 | 3.26 | 3.28 | 3.25 | 4.40 | 2.17 | 4.35 | 5.42 | 3.80 | 3.88 | 5.41 | 4.42 | 3.80 | 3.26 |
| $Al_2O_3$ | 20.63 | 20.64 | 20.52 | 20.64 | 20.72 | 20.57 | 20.85 | 20.58 | 21.43 | 20.58 | 20.59 | 21.03 | 20.51 | 20.97 | 20.91 | 20.61 |
| $MgO$ | 8.94 | 8.47 | 7.81 | 8.75 | 9.34 | 9.07 | 9.61 | 8.69 | 9.18 | 8.72 | 8.41 | 10.83 | 9.04 | 10.75 | 8.57 | 8.40 |
| $CaO$ | 0.14 | 0.14 | 0.14 | 0.08 | 0.09 | 0.09 | - | 0.31 | 0.08 | 0.08 | 0.08 | 0.10 | 0.09 | 0.10 | 0.14 | 0.14 |
| $ZnO$ | 3.81 | 3.82 | 5.06 | 5.09 | - | 2.54 | 2.57 | 3.81 | 2.54 | 5.07 | 5.08 | 1.30 | 2.53 | - | 5.08 | 3.81 |
| $SiO_2+B_2O_3+Al_2O_3+MgO+CaO+ZnO$ | 98.74 | 98.79 | 98.90 | 98.84 | 96.59 | 96.81 | 99.58 | 97.84 | 98.61 | 98.84 | 98.85 | 98.82 | 96.82 | 97.78 | 98.94 | 98.56 |
| $MgO+CaO$ | 9.08 | 8.61 | 7.95 | 8.83 | 9.43 | 9.16 | 9.61 | 9.00 | 9.26 | 8.80 | 8.49 | 10.93 | 9.13 | 10.85 | 8.71 | 8.54 |
| $MgO+ZnO$ | 12.75 | 12.29 | 12.87 | 13.84 | 9.34 | 11.61 | 12.18 | 12.50 | 11.72 | 13.79 | 13.49 | 12.13 | 11.57 | 10.75 | 13.65 | 12.21 |
| $Li_2O$ | - | 0.14 | 0.14 | 0.28 | - | - | 0.17 | - | 0.13 | 0.28 | 0.28 | 0.29 | - | 0.19 | 0.28 | 0.14 |
| $Na_2O$ | 0.10 | 0.19 | 0.19 | 0.10 | 0.10 | - | - | 0.16 | - | 0.10 | 0.10 | 0.10 | - | 0.10 | 0.19 | 0.19 |
| $K_2O$ | 0.10 | 0.10 | 0.10 | - | 0.10 | - | - | - | - | - | - | - | - | - | - | 0.10 |
| $Li_2O+Na_2O+K_2O$ | 0.20 | 0.43 | 0.43 | 0.38 | 0.20 | - | 0.17 | 0.16 | 0.13 | 0.38 | 0.38 | 0.39 | - | 0.29 | 0.47 | 0.43 |
| $TiO_2$ | - | - | - | - | 1.28 | 1.27 | - | 0.65 | - | - | - | - | 1.27 | 0.66 | - | - |
| $ZrO_2$ | 0.96 | 0.58 | 0.57 | 0.58 | 1.93 | 1.92 | - | 1.15 | 0.96 | 0.58 | 0.58 | 0.59 | 1.91 | 1.17 | 0.19 | 0.58 |
| $ZnO+ZrO_2$ | 4.77 | 4.40 | 5.63 | 5.67 | 1.93 | 4.46 | 2.57 | 4.96 | 3.50 | 5.65 | 5.66 | 1.89 | 4.44 | 1.17 | 5.27 | 4.39 |
| $B_2O_3+ZnO+ZrO_2$ | 8.03 | 7.66 | 8.88 | 8.93 | 5.21 | 7.71 | 6.97 | 7.13 | 7.85 | 11.07 | 9.46 | 5.77 | 9.85 | 5.59 | 9.07 | 7.65 |
| $TiO_2+ZrO_2$ | 0.96 | 0.58 | 0.57 | 0.58 | 3.21 | 3.19 | - | 1.80 | 0.96 | 0.58 | 0.58 | 0.59 | 3.18 | 1.83 | 0.19 | 0.58 |
| $Fe_2O_3$ | 0.10 | 0.20 | 0.10 | 0.20 | - | - | 0.25 | 0.20 | 0.30 | 0.20 | 0.20 | 0.20 | - | 0.10 | 0.40 | 0.20 |
| $Y_2O_3$ | - | - | - | - | - | - | - | - | - | - | - | - | - | - | - | - |
| $SnO_2$ | - | - | - | - | - | - | - | - | - | - | - | - | - | - | - | 0.24 |
| $CeO_2$ | - | - | - | - | - | - | - | - | - | - | - | - | - | - | - | - |
| $F_2$ | - | - | - | - | - | - | - | - | - | - | - | - | - | - | - | - |
| $SO_3$ | - | - | - | - | - | - | - | - | - | - | - | - | - | - | - | - |
| Density [g/cm³] | 2.525 | 2.512 | 2.524 | 2.539 | 2.488 | 2.531 | 2.492 | 2.539 | 2.510 | 2.535 | 2.533 | 2.499 | 2.526 | 2.490 | 2.536 | 2.518 |
| Young's modulus [GPa] | 91 | 90 | 90 | 91 | 91 | 91 | 90 | 92 | 91 | 90 | 90 | 91 | 90 | 91 | 91 | 90 |
| Average linear expansion coefficient [×10⁻⁷/°C] | 30 | 30 | 30 | 30 | 29 | 29 | 30 | 29 | 29 | 31 | 30 | 32 | 30 | 32 | 30 | 30 |

| Components (mass%) and properties | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|---|---|---|---|---|
| Glass transition temperature [°C] | 760 | 750 | 747 | 737 | 764 | 749 | 742 | 760 | 742 | 707 | 732 | 746 | 722 | 740 | 725 | 743 |
| Devitrification temperature [°C] | 1378 | 1361 | 1367 | 1371 | 1386 | 1374 | 1359 | 1386 | 1344 | 1338 | 1348 | 1352 | 1330 | 1374 | 1356 | 1392 |
| Working temperature [°C] | 1393 | 1405 | 1406 | 1378 | 1410 | 1378 | 1385 | 1387 | 1369 | 1343 | 1377 | 1368 | 1343 | 1374 | 1358 | 1405 |
| ΔT [°C] | 15 | 44 | 39 | 7 | 24 | 4 | 26 | 1 | 25 | 5 | 29 | 16 | 13 | 0 | 2 | 13 |
| Permittivity | 5.3 | 5.2 | 5.3 | 5.3 | 5.5 | 5.6 | 5.1 | 5.3 | 5.1 | 5.3 | 5.2 | 5.2 | 5.6 | 5.4 | 5.1 | 5.2 |
| Dielectric loss tangent | 0.0027 | 0.0035 | 0.0036 | 0.0034 | 0.0018 | 0.0015 | 0.0034 | 0.0026 | 0.0022 | 0.0033 | 0.0033 | 0.0034 | 0.0014 | 0.0028 | 0.0039 | 0.0036 |
| Number of bubbles | C | C | C | B | D | D | B | C | B | B | C | C | C | B | B | A |

[Table 2]

| Components (mass%) and properties | | Ex. 17 | Ex. 18 | Ex. 19 | Ex. 20 | Ex. 21 | Ex. 22 | Ex. 23 | Ex. 24 | Ex. 25 | Ex. 26 | Ex. 27 | Ex. 28 | Ex. 29 | Ex. 30 | Ex. 31 | Ex. 32 |
|---|---|---|---|---|---|---|---|---|---|---|---|---|---|---|---|---|---|
| | $SiO_2$ | 60.91 | 61.89 | 60.76 | 61.02 | 60.88 | 61.68 | 61.00 | 61.26 | 61.54 | 61.87 | 60.36 | 61.13 | 60.91 | 61.78 | 60.52 | 61.46 |
| | $B_2O_3$ | 3.83 | 3.23 | 3.25 | 3.26 | 3.80 | 3.88 | 3.46 | 3.79 | 3.87 | 3.89 | 3.79 | 4.36 | 3.80 | 3.89 | 3.78 | 3.86 |
| | $Al_2O_3$ | 20.76 | 20.46 | 20.55 | 20.64 | 20.59 | 21.03 | 20.53 | 20.88 | 20.97 | 21.57 | 21.36 | 20.83 | 20.60 | 21.06 | 20.95 | 20.95 |
| | $MgO$ | 9.87 | 8.40 | 8.59 | 8.75 | 8.41 | 10.83 | 8.08 | 8.53 | 10.49 | 11.24 | 8.96 | 8.82 | 9.04 | 11.21 | 8.54 | 10.79 |
| | $CaO$ | 0.10 | 0.14 | 0.08 | 0.08 | 0.08 | 0.10 | 0.08 | 0.08 | 0.10 | - | 0.09 | 0.08 | 0.09 | 0.11 | - | 0.10 |
| | $ZnO$ | 2.56 | 3.78 | 5.07 | 5.09 | 5.08 | 1.30 | 5.70 | 5.07 | 2.59 | - | 3.80 | 3.82 | 3.81 | 1.95 | 3.79 | 1.29 |
| | $SiO_2+B_2O_3+Al_2O_3+MgO+CaO+ZnO$ | 98.03 | 97.90 | 98.30 | 98.84 | 98.84 | 98.82 | 98.85 | 99.61 | 99.56 | 98.57 | 98.36 | 99.04 | 98.25 | 100.00 | 97.58 | 98.45 |
| | $MgO+CaO$ | 9.97 | 8.54 | 8.67 | 8.83 | 8.49 | 10.93 | 8.16 | 8.61 | 10.59 | 11.24 | 9.05 | 8.90 | 9.13 | 11.32 | 8.54 | 10.89 |
| | $MgO+ZnO$ | 12.43 | 12.18 | 13.66 | 13.84 | 13.49 | 12.13 | 13.78 | 13.60 | 13.08 | 11.24 | 12.76 | 12.64 | 12.85 | 13.16 | 12.33 | 12.08 |
| | $Li_2O$ | 0.28 | 0.14 | 0.28 | 0.28 | 0.28 | 0.29 | 0.28 | - | 0.19 | 0.38 | 0.19 | 0.23 | 0.28 | - | 0.28 | 0.28 |
| | $Na_2O$ | 0.10 | 0.19 | 0.10 | 0.10 | 0.10 | 0.10 | 0.10 | - | 0.10 | - | 0.10 | 0.10 | 0.10 | - | 0.10 | 0.10 |
| | $K_2O$ | - | 0.10 | - | - | - | - | - | - | - | - | - | - | - | - | - | - |
| | $Li_2O+Na_2O+K_2O$ | 0.38 | 0.43 | 0.38 | 0.38 | 0.38 | 0.39 | 0.38 | - | 0.29 | 0.38 | 0.29 | 0.33 | 0.38 | - | 0.38 | 0.38 |
| | $TiO_2$ | - | - | - | - | - | - | - | - | - | - | - | - | - | - | 0.27 | - |
| | $ZrO_2$ | 0.58 | 0.57 | 0.58 | 0.58 | 0.58 | 0.59 | 0.57 | 0.19 | - | 0.79 | 1.15 | 0.39 | 0.58 | - | 1.15 | 0.59 |
| | $ZnO+ZrO_2$ | 3.14 | 4.35 | 5.65 | 5.67 | 5.66 | 1.89 | 6.27 | 5.26 | 2.59 | 0.79 | 4.95 | 4.21 | 4.39 | 1.95 | 4.94 | 1.88 |
| | $B_2O_3+ZnO+ZrO_2$ | 6.97 | 7.58 | 8.90 | 8.93 | 9.46 | 5.77 | 9.73 | 9.05 | 6.46 | 4.68 | 8.74 | 8.57 | 8.19 | 5.84 | 8.72 | 5.74 |
| | $TiO_2+ZrO_2$ | 0.58 | 0.57 | 0.58 | 0.58 | 0.58 | 0.59 | 0.57 | 0.19 | - | 0.79 | 1.15 | 0.39 | 0.58 | - | 1.42 | 0.59 |
| | $Fe_2O_3$ | 0.20 | 0.20 | 0.20 | 0.20 | 0.20 | 0.20 | 0.20 | 0.20 | 0.15 | 0.26 | 0.20 | - | 0.20 | - | 0.20 | 0.20 |
| | $Y_2O_3$ | - | - | - | - | - | - | - | - | - | - | - | - | - | - | - | - |
| | $SnO_2$ | - | - | - | - | - | - | - | - | - | - | - | 0.24 | - | - | - | - |
| | $CeO_2$ | 0.81 | - | 0.54 | - | - | - | - | - | - | - | - | - | - | - | - | - |
| | $F_2$ | - | 0.90 | - | - | - | - | - | - | - | - | - | - | 0.59 | - | 0.42 | 0.38 |
| | $SO_3$ | - | - | 0.004 | 0.003 | 0.002 | 0.002 | 0.002 | - | - | 0.002 | - | - | 0.002 | - | 0.003 | 0.001 |
| Density [g/cm³] | | 2.526 | 2.515 | 2.553 | 2.539 | 2.533 | 2.499 | 2.541 | 2.530 | 2.508 | 2.490 | 2.535 | 2.516 | 2.527 | 2.505 | 2.529 | 2.500 |
| Young's modulus [GPa] | | 91 | 90 | 91 | 91 | 90 | 91 | 91 | 91 | 91 | 92 | 91 | 90 | 90 | 92 | 91 | 91 |
| Average linear expansion coefficient [$\times 10^{-7}$/°C] | | 32 | 31 | 31 | 31 | 30 | 32 | 30 | 29 | 32 | 32 | 30 | 30 | 32 | 32 | 30 | 32 |

23

(continued)

| Components (mass%) and properties | Ex. 17 | Ex. 18 | Ex. 19 | Ex. 20 | Ex. 21 | Ex. 22 | Ex. 23 | Ex. 24 | Ex. 25 | Ex. 26 | Ex. 27 | Ex. 28 | Ex. 29 | Ex. 30 | Ex. 31 | Ex. 32 |
|---|---|---|---|---|---|---|---|---|---|---|---|---|---|---|---|---|
| Glass transition temperature [°C] | 738 | 708 | 739 | 737 | 732 | 746 | 730 | 748 | 744 | 743 | 738 | 724 | 706 | 759 | 711 | 729 |
| Devitrification temperature [°C] | 1362 | 1367 | 1352 | 1371 | 1348 | 1352 | 1368 | 1372 | 1369 | 1369 | 1335 | 1351 | 1348 | 1365 | 1356 | 1341 |
| Working temperature [°C] | 1373 | 1382 | 1377 | 1378 | 1377 | 1368 | 1382 | 1377 | 1376 | 1380 | 1368 | 1393 | 1362 | 1380 | 1366 | 1359 |
| ΔT [°C] | 11 | 15 | 25 | 7 | 29 | 16 | 14 | 5 | 7 | 11 | 33 | 42 | 14 | 15 | 10 | 18 |
| Permittivity | 5.3 | 5.2 | 5.3 | 5.3 | 5.2 | 5.2 | 5.2 | 5.1 | 5.2 | 5.2 | 5.3 | 5.3 | 5.2 | 5.3 | 5.3 | 5.2 |
| Dielectric loss tangent | 0.0035 | 0.0032 | 0.0034 | 0.0034 | 0.0033 | 0.0034 | 0.0033 | 0.0031 | 0.0040 | 0.0030 | 0.0026 | 0.0038 | 0.0031 | 0.0037 | 0.0026 | 0.0033 |
| Number of bubbles | B | C | B | A | B | A | B | C | B | B | B | B | B | B | B | A |

[Table 3]

| Components (mass%) and properties | Ex. 33 | Ex. 34 | Ex. 35 | Ex. 36 | Ex. 37 | Ex. 38 | Ex. 39 | Ex. 40 | Ex. 41 | Ex. 42 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|
| $SiO_2$ | 61.24 | 61.87 | 60.78 | 62.02 | 60.77 | 61.90 | 61.03 | 61.58 | 60.67 | 59.37 | 54.83 | 65.00 | 63.50 | 61.00 | 61.38 | 59.44 |
| $B_2O_3$ | 3.25 | 4.38 | 3.23 | 4.42 | 3.79 | 4.38 | 3.24 | 4.36 | 3.22 | 6.55 | 5.95 | - | 4.50 | 2.00 | 5.02 | 3.68 |
| $Al_2O_3$ | 20.55 | 20.77 | 20.87 | 20.16 | 21.03 | 20.78 | 20.64 | 20.66 | 20.84 | 20.71 | 14.52 | 25.00 | 20.00 | 20.50 | 22.92 | 19.94 |
| $MgO$ | 8.35 | 9.24 | 7.78 | 10.12 | 8.68 | 9.26 | 8.42 | 9.32 | 7.81 | 9.74 | 0.38 | 10.00 | 8.50 | 11.50 | 9.43 | 5.27 |
| $CaO$ | 0.08 | 0.18 | 0.17 | 0.22 | 0.09 | 0.09 | 0.08 | 0.09 | 0.08 | 0.09 | 22.80 | - | 0.20 | 1.00 | 0.10 | 0.05 |
| $ZnO$ | 5.07 | 2.56 | 5.03 | 2.58 | 3.80 | 2.56 | 3.79 | 2.55 | 5.02 | - | - | - | - | 4.00 | - | 10.45 |
| $SiO_2+B_2O_3+Al_2O_3+MgO+CaO+ZnO$ | 98.54 | 99.00 | 97.86 | 99.52 | 98.16 | 98.97 | 97.20 | 98.56 | 97.64 | 96.46 | 98.48 | 100.00 | 96.70 | 100.00 | 98.85 | 98.83 |
| $MgO+CaO$ | 8.43 | 9.42 | 7.95 | 10.34 | 8.77 | 9.35 | 8.50 | 9.41 | 7.89 | 9.83 | 23.18 | 10.00 | 8.70 | 12.50 | 9.53 | 5.32 |
| $MgO+ZnO$ | 13.42 | 11.80 | 12.81 | 12.70 | 12.48 | 11.82 | 12.21 | 11.87 | 12.83 | 9.74 | 0.38 | 10.00 | 8.50 | 15.50 | 9.43 | 15.72 |
| $Li_2O$ | 0.28 | 0.19 | 0.23 | 0.14 | 0.19 | 0.24 | 0.23 | 0.23 | 0.23 | 0.23 | - | - | - | - | 0.99 | - |
| $Na_2O$ | 0.10 | 0.10 | 0.10 | 0.10 | - | 0.10 | 0.10 | 0.10 | 0.10 | - | 0.49 | - | 0.10 | - | 0.05 | 0.37 |
| $K_2O$ | - | 0.15 | - | - | - | - | - | - | - | - | 0.30 | - | 0.10 | - | 0.01 | 0.14 |
| $Li_2O+Na_2O+K_2O$ | 0.38 | 0.44 | 0.33 | 0.24 | 0.19 | 0.34 | 0.33 | 0.33 | 0.33 | 0.23 | 0.79 | - | 0.20 | - | 1.05 | 0.51 |
| $TiO_2$ | - | - | 0.15 | - | 0.27 | - | 0.40 | - | 0.15 | 1.28 | - | - | 2.50 | - | 0.02 | - |
| $ZrO_2$ | 0.58 | - | 1.33 | - | 1.15 | - | 1.34 | - | 1.33 | 1.93 | - | - | - | - | - | 0.56 |
| $ZnO+ZrO_2$ | 5.65 | 2.56 | 6.36 | 2.58 | 4.95 | 2.56 | 5.13 | 2.55 | 6.35 | 1.93 | - | - | - | 4.00 | - | 11.01 |
| $B_2O_3+ZnO+ZrO_2$ | 8.90 | 6.94 | 9.59 | 7.00 | 8.74 | 6.94 | 8.37 | 6.91 | 9.57 | 8.48 | 5.95 | - | 4.50 | 6.00 | 5.02 | 14.69 |
| $TiO_2+ZrO_2$ | 0.58 | - | 1.48 | - | 1.42 | - | 1.74 | - | 1.48 | 3.21 | - | - | 2.50 | - | 0.02 | 0.56 |
| $Fe_2O_3$ | 0.15 | 0.20 | 0.10 | - | - | 0.15 | 0.20 | 0.20 | 0.20 | 0.10 | 0.25 | - | 0.30 | - | 0.05 | 0.10 |
| $Y_2O_3$ | 0.35 | 0.36 | - | - | - | - | - | - | 0.35 | - | - | - | - | - | - | - |
| $SnO_2$ | - | - | 0.23 | 0.24 | 0.23 | - | - | - | - | - | - | - | 0.30 | - | - | - |
| $CeO_2$ | - | - | - | - | - | 0.54 | 0.53 | - | - | - | - | - | - | - | - | - |
| $F_2$ | - | - | - | - | - | - | - | 0.91 | - | - | 0.48 | - | - | - | - | - |
| $SO_3$ | 0.002 | 0.002 | 0.001 | 0.003 | 0.002 | 0.002 | 0.001 | 0.001 | 0.001 | 0.002 | - | - | - | - | - | - |
| Density [g/cm³] | 2.540 | 2.495 | 2.550 | 2.501 | 2.534 | 2.498 | 2.542 | 2.493 | 2.550 | 2.489 | 2.629 | 2.479 | 2.453 | 2.557 | 2.452 | 2.586 |
| Young's modulus [GPa] | 91 | 90 | 91 | 90 | 91 | 90 | 91 | 90 | 91 | 90 | 83 | 94 | 87 | 93 | 89 | 89 |
| Average linear expansion coefficient [×10⁻⁷/°C] | 30 | 31 | 29 | 31 | 29 | 30 | 29 | 31 | 30 | 31 | 60 | 29 | 29 | 33 | 33 | 29 |

EP 4 725 922 A1

(continued)

| Components (mass%) and properties | Ex. 33 | Ex. 34 | Ex. 35 | Ex. 36 | Ex. 37 | Ex. 38 | Ex. 39 | Ex. 40 | Ex. 41 | Ex. 42 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|
| Glass transition temperature [°C] | 735 | 742 | 729 | 731 | 729 | 736 | 734 | 697 | 735 | 706 | 681 | 819 | 752 | 762 | 722 | 723 |
| Devitrification temperature [°C] | 1356 | 1336 | 1362 | 1355 | 1354 | 1347 | 1332 | 1338 | 1354 | 1315 | 1090 | 1498 | 1363 | 1376 | 1337 | 1422 |
| Working temperature [°C] | 1379 | 1390 | 1388 | 1390 | 1387 | 1388 | 1368 | 1368 | 1372 | 1324 | 1205 | 1462 | 1427 | 1359 | 1371 | 1374 |
| $\Delta T$ [°C] | 23 | 54 | 26 | 35 | 33 | 41 | 36 | 30 | 18 | 9 | 115 | -36 | 64 | -17 | 34 | -48 |
| Permittivity | 5.3 | 5.2 | 5.4 | 5.3 | 5.4 | 5.2 | 5.4 | 5.1 | 5.3 | 5.5 | 6.5 | 5.2 | 5.4 | 5.5 | 5.3 | 5.4 |
| Dielectric loss tangent | 0.0034 | 0.0040 | 0.0026 | 0.0041 | 0.0026 | 0.0040 | 0.0024 | 0.0036 | 0.0024 | 0.0016 | 0.0040 | 0.0042 | 0.0039 | 0.0038 | 0.0053 | 0.0041 |
| Number of bubbles | B | B | B | A | B | B | B | B | B | B | A | D | C | B | B | D |

[Table 4]

| Components (mass%) and properties | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 | Comp. Ex. 15 | Comp. Ex. 16 |
|---|---|---|---|---|---|---|---|---|---|---|
| $SiO_2$ | 61.56 | 70.74 | 55.39 | 60.34 | 63.91 | 60.00 | 60.66 | 60.13 | 60.15 | 59.29 |
| $B_2O_3$ | 4.53 | 1.14 | 4.35 | 3.71 | 1.14 | 4.41 | 3.22 | 5.24 | 4.26 | 4.26 |
| $Al_2O_3$ | 14.43 | 15.34 | 21.43 | 24.43 | 18.27 | 22.23 | 20.36 | 22.79 | 20.65 | 21.76 |
| MgO | 12.62 | 10.48 | 11.05 | 6.43 | 14.10 | 11.07 | 7.49 | 3.43 | 4.35 | 5.94 |
| CaO | 0.12 | 0.10 | 0.11 | 0.49 | 0.14 | 0.28 | 0.07 | 2.95 | 4.72 | 0.10 |
| ZnO | 5.19 | 1.30 | 6.36 | 3.71 | 1.33 | 1.29 | 6.27 | 4.90 | 4.98 | 3.73 |
| $SiO_2+B_2O_3+Al_2O_3+MgO+ CaO+ZnO$ | 98.45 | 99.10 | 98.69 | 99.11 | 98.89 | 99.28 | 98.07 | 99.44 | 99.11 | 95.08 |
| MgO+CaO | 12.74 | 10.58 | 11.16 | 6.92 | 14.24 | 11.35 | 7.56 | 6.38 | 9.07 | 6.04 |
| MgO+ZnO | 17.81 | 11.78 | 17.41 | 10.14 | 15.43 | 12.36 | 13.76 | 8.33 | 9.33 | 9.67 |
| $Li_2O$ | - | 0.20 | - | | - | - | - | - | - | - |
| $Na_2O$ | 0.40 | 0.10 | 0.39 | 0.38 | - | 0.29 | 0.38 | 0.37 | 0.38 | 4.17 |
| $K_2O$ | 0.15 | - | 0.15 | 0.14 | - | 0.15 | 0.15 | - | 0.14 | - |
| $Li_2O+Na_2O+K_2O$ | 0.55 | 0.30 | 0.54 | 0.52 | - | 0.44 | 0.53 | 0.37 | 0.52 | 4.17 |
| $TiO_2$ | - | - | - | - | - | 0.28 | 0.64 | - | - | - |
| $ZrO_2$ | 1.00 | 0.60 | 0.77 | 0.37 | 1.01 | - | 0.76 | 0.19 | 0.38 | 0.75 |
| $ZnO+ZrO_2$ | 6.19 | 1.90 | 7.13 | 4.08 | 2.34 | 1.29 | 7.03 | 5.09 | 5.36 | 4.48 |
| $B_2O_3+ZnO+ZrO_2$ | 10.72 | 3.04 | 11.48 | 7.79 | 3.48 | 5.70 | 10.25 | 10.33 | 9.62 | 8.74 |
| $TiO_2+ZrO_2$ | 1.00 | 0.60 | 0.77 | 0.37 | 1.01 | 0.28 | 1.40 | 0.19 | 0.38 | 0.75 |
| $Fe_2O_3$ | - | - | - | - | 0.10 | - | - | - | - | - |
| $Y_2O_3$ | - | - | - | - | - | - | - | - | - | - |
| $SnO_2$ | - | - | - | - | - | - | - | - | - | - |
| $CeO_2$ | - | - | - | - | - | - | - | - | - | - |
| $F_2$ | - | - | - | - | - | - | - | - | - | - |
| $SO_3$ | - | - | - | - | - | - | - | - | - | - |
| Density [g/cm³] | 2.538 | 2.438 | 2.608 | 2.510 | 2.540 | 2.506 | 2.551 | 2.505 | 2.538 | 2.494 |
| Young's modulus [GPa] | 88 | 85 | 94 | 90 | 94 | 92 | 90 | 87 | 88 | 85 |
| Average linear expansion coefficient [$\times 10^{-7}$/°C] | 30 | 30 | 37 | 30 | 34 | 34 | 31 | 30 | 34 | 42 |
| Glass transition temperature [°C] | 715 | 754 | 717 | 766 | 775 | 751 | 740 | 742 | 742 | 703 |

(continued)

| Components (mass%) and properties | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 | Comp. Ex. 15 | Comp. Ex. 16 |
|---|---|---|---|---|---|---|---|---|---|---|
| Devitrification temperature [°C] | 1405 | 1480 | 1377 | 1483 | 1427 | 1380 | 1397 | 1447 | 1337 | 1383 |
| Working temperature [°C] | 1335 | 1455 | 1282 | 1417 | 1370 | 1361 | 1384 | 1414 | 1390 | 1394 |
| ΔT [°C] | -70 | -25 | -95 | -66 | -57 | -19 | -13 | -33 | 53 | 11 |
| Permittivity | 5.7 | 5.1 | 5.8 | 5.3 | 5.4 | 5.5 | 5.6 | 5.2 | 5.5 | 5.9 |
| Dielectric loss tangent | 0.0032 | 0.0025 | 0.0046 | 0.0050 | 0.0022 | 0.0051 | 0.0042 | 0.0045 | 0.0044 | 0.0164 |
| Number of bubbles | C | - | B | D | D | C | C | D | D | D |

From each Example, the results of a linear expansion coefficient of 29 to $32 \times 10^{-7}$/°C, a Young's modulus of 90 to 92 GPa, a working temperature of 1324 to 1410°C, and a difference $\Delta$T (working temperature - devitrification temperature) of 0 to 54°C were obtained.

The glass composition of Comparative Example 1 has an E-glass composition. E-glass is inferior in Young's modulus and average linear expansion coefficient at 50 to 350°C. The glass composition of Comparative Example 2 has an S-glass composition. S-glass has a high working temperature and a negative $\Delta$T and is inferior in mass production. The glass composition of Comparative Example 3 has the glass composition of Example 2 of Patent Literature 1. This glass is inferior in Young's modulus and has a slightly higher working temperature. The glass composition of Comparative Example 4 has the glass composition of Example 2 of Patent Literature 2. This glass is inferior in average linear expansion coefficient at 50 to 350°C. The reason why the linear expansion coefficient of Comparative Example 4 is higher ($33 \times 10^{-7}$/°C) than the measured value ($29 \times 10^{-7}$/°C) in Patent Literature 2 is due to the difference in the temperature range in which the measurement was performed. Moreover, when the present inventors conducted further tests, Comparative Example 4 had a negative $\Delta$T and was inferior in mass production. Also, in the glass compositions of Comparative Examples 5 to 16, at least one of the average linear expansion coefficient, the Young's modulus, and the difference $\Delta$T was insufficient.

## Claims

1. A glass composition comprising the following components, in mass%:

$$56 \leq SiO_2 \leq 70;$$

$$0.1 \leq B_2O_3 \leq 8$$

$$15 \leq Al_2O_3 \leq 24;$$

$$4 \leq MgO \leq 14;$$

$$0 \leq CaO \leq 4;$$

$$0 \leq ZnO \leq 10;$$

$$0 \leq (Li_2O + Na_2O + K_2O) \leq 4;$$

and

$$0.1 \leq ZrO_2 \leq 5,$$

wherein
the glass composition is substantially free of $TiO_2$.

2. A glass composition comprising the following components, in mass%:

$$56 \leq SiO_2 \leq 70;$$

$$0.1 \leq B_2O_3 \leq 8;$$

$$15 \leq Al_2O_3 \leq 24;$$

$$4 \leq MgO \leq 14;$$

$$0 \leq CaO \leq 4;$$

$$0.1 \leq ZnO \leq 3;$$

and

$$0 \leq (Li_2O + Na_2O + K_2O) \leq 4,$$

wherein
the glass composition is substantially free of $TiO_2$ and $ZrO_2$.

3. A glass composition comprising the following components, in mass%:

$$56 \leq SiO_2 \leq 70;$$

$$0.1 \leq B_2O_3 \leq 8;$$

$$15 \leq Al_2O_3 \leq 24;$$

$$4 \leq MgO \leq 14;$$

$$0 \leq CaO \leq 4;$$

$$0 \leq ZnO \leq 10:$$

$$0 \leq (Li_2O + Na_2O + K_2O) \leq 4;$$

and

$$1 \leq ZrO_2 \leq 5.$$

4. The glass composition according to any one of claims 1 to 3, further comprising $75 \leq (SiO_2 + B_2O_3 + Al_2O_3 + MgO + CaO + ZnO) \leq 99$ in mass%.

5. The glass composition according to claim 1 or 3, further comprising $1 \leq (ZnO + ZrO_2) \leq 15$ in mass%.

6. The glass composition according to any one of claims 1 to 3, further comprising $1 \leq (Li_2O + Na_2O + K_2O + TiO_2 + ZrO_2 + T\text{-}Fe_2O_3) \leq 19$ in mass%,
where $T\text{-}Fe_2O_3$ is total iron oxide converted into $Fe_2O_3$.

7. The glass composition according to any one of claims 1 to 3, further comprising $2 \leq B_2O_3 \leq 6$ in mass%.

8. The glass composition according to any one of claims 1 to 3, further comprising $5 \leq MgO \leq 13$ in mass%.

9. The glass composition according to any one of claims 1 to 3, further comprising $0 \leq CaO \leq 1$ in mass%.

10. The glass composition according to any one of claims 1 to 3, being substantially free of SrO.

11. The glass composition according to any one of claims 1 to 3, being substantially free of BaO.

12. The glass composition according to claim 1 or 3, further comprising $0 \leq ZnO \leq 8$ in mass%.

**13.** The glass composition according to any one of claims 1 to 3, further comprising $4 \leq (MgO + ZnO) \leq 17$ in mass%.

**14.** The glass composition according to any one of claims 1 to 3, further comprising $0 \leq (Li_2O + Na_2O + K_2O) \leq 1$ in mass%.

**15.** The glass composition according to any one of claims 1 to 3, further comprising $0.1 \leq (Li_2O + Na_2O + K_2O) \leq 1$ in mass%.

**16.** The glass composition according to any one of claims 1 to 3, further comprising $0 \leq (Na_2O + K_2O) \leq 1$ in mass%.

**17.** The glass composition according to claim 1 or 3, further comprising $0 \leq (TiO_2 + ZrO_2) \leq 4$ in mass%.

**18.** The glass composition according to any one of claims 1 to 3, further comprising $0 \leq T\text{-}Fe_2O_3 \leq 5$ in mass%, where $T\text{-}Fe_2O_3$ is total iron oxide converted into $Fe_2O_3$.

**19.** The glass composition according to any one of claims 1 to 3, further comprising $0 \leq Y_2O_3 \leq 3$ in mass%.

**20.** The glass composition according to any one of claims 1 to 3, further comprising $0 \leq T\text{-}SnO_2 \leq 2$ in mass%, where $T\text{-}SnO_2$ is total tin oxide converted into $SnO_2$.

**21.** The glass composition according to any one of claims 1 to 3, further comprising $0 \leq CeO_2 \leq 2$ in mass%.

**22.** The glass composition according to any one of claims 1 to 3, further comprising $0 \leq F_2 \leq 5$ in mass%.

**23.** The glass composition according to any one of claims 1 to 3, further comprising $0 \leq SO_3 \leq 0.5$ in mass%.

**24.** The glass composition according to any one of claims 1 to 3, wherein when a temperature at which a viscosity of the glass composition is 1000 dPa•sec is defined as a working temperature, the working temperature is 1450°C or lower.

**25.** The glass composition according to any one of claims 1 to 3, wherein when a temperature at which a viscosity of the glass composition is 1000 dPa•sec is defined as a working temperature, a temperature difference $\Delta T$ determined by subtracting a devitrification temperature from the working temperature is 0°C or more.

**26.** The glass composition according to any one of claims 1 to 3, having a Young's modulus of 85 to 100 GPa.

**27.** The glass composition according to any one of claims 1 to 3, having an average linear expansion coefficient of 20 to $35 \times 10^{-7}$/°C at 50 to 350°C.

**28.** The glass composition according to any one of claims 1 to 3, having a permittivity of 6.5 or less at a frequency of 1 GHz.

**29.** The glass composition according to any one of claims 1 to 3, having a dielectric loss tangent of 0.0060 or less at a frequency of 1 GHz.

**30.** A glass fiber comprising the glass composition according to any one of claims 1 to 3.

**31.** The glass fiber according to claim 30, having at least one shape selected from the group consisting of roving, roving cloth, continuous strand mat, milled fiber, flat fiber, filament mat, chopped strand, yarn, glass cloth, and glass tape.

**32.** A glass filler comprising the glass composition according to any one of claims 1 to 3.

**33.** The glass filler according to claim 32, being at least one selected from the group consisting of a flaky glass, a glass powder, a glass bead, and a fine flake.

**34.** A molded article comprising the glass fiber according to claim 30, wherein the molded article is at least one selected from the group consisting of a rubber reinforcing cord, a nonwoven fabric, a prepreg, a reinforced plastic, a printed board, an inorganic cured body, a filter, a heat insulating material, a sound absorbing material, and a battery separator.

**35.** A filler-containing product comprising the glass filler according to claim 32, wherein

the filler-containing product is at least one selected from the group consisting of a reinforced plastic, a paint, an ink, a printed board, an inorganic cured body, and a cosmetic.

36. A method for producing a glass fiber, the method comprising: a step of melting the glass composition according to any one of claims 1 to 3; and a step of shaping the molten glass composition into a glass fiber.

37. A method for producing a glass filler, the method comprising: a step of melting the glass composition according to any one of claims 1 to 3; and a step of shaping the molten glass composition into a glass filler.

## INTERNATIONAL SEARCH REPORT

| International application No. |
|---|
| **PCT/JP2024/020548** |

**A. CLASSIFICATION OF SUBJECT MATTER**

*C03C 3/091*(2006.01)i; *C03C 3/093*(2006.01)i; *C03C 3/095*(2006.01)i; *C03C 13/00*(2006.01)i
FI: C03C3/091; C03C3/093; C03C3/095; C03C13/00

According to International Patent Classification (IPC) or to both national classification and IPC

**B. FIELDS SEARCHED**

Minimum documentation searched (classification system followed by classification symbols)

C03C3/091; C03C3/093; C03C3/095; C03C13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| X | JP 07-172863 A (CENTRAL GLASS CO., LTD.) 11 July 1995 (1995-07-11) table 1 | 1-6, 8-13, 17-29 |
| A | | 7, 14-16, 31-37 |
| X | JP 01-028249 A (MATSUSHITA ELECTRIC WORKS, LTD.) 30 January 1989 (1989-01-30) p. 1, right column, lines 13-17, table 1 | 1, 3-8, 10-14, 16-29, 32-33, 35 |
| A | | 2, 9, 15, 30-31, 34, 36-37 |
| X | JP 61-163696 A (NGK SPARK PLUG CO., LTD.) 24 July 1986 (1986-07-24) claims, table 1 | 1, 3-6, 8-14, 16-18, 20-29, 32-33, 35, 37 |
| A | | 2, 7, 15, 19, 30-31, 34, 36 |

☑ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
|---|
| **PCT/JP2024/020548** |

## C.  DOCUMENTS CONSIDERED TO BE RELEVANT

| Category* | Citation of document, with indication, where appropriate, of the relevant passages | Relevant to claim No. |
|---|---|---|
| X | JP 59-137341 A (NGK SPARK PLUG CO., LTD.) 07 August 1984 (1984-08-07)<br>examples, table 1 | 1, 3-6, 8-14, 16-18,<br>20-29, 32-33, 35, 37 |
| A | | 2, 7, 15, 19,<br>30-31, 34, 36 |
| X | JP 57-027945 A (ANCHOR HOCKING CORP.) 15 February 1982 (1982-02-15)<br>claims, examples, table II | 1, 4-13, 17-29 |
| A | | 2-3, 14-16, 30-37 |
| X | JP 63-050345 A (MATSUSHITA ELECTRIC WORKS, LTD.) 03 March 1988 (1988-03-03)<br>claims, examples, table 1 | 1, 4-5, 7, 9-14, 16-<br>29, 32-33, 35, 37 |
| A | | 2-3, 6, 8, 15,<br>30-31, 34, 36 |
| X | JP 02-164741 A (MATSUSHITA ELECTRIC WORKS, LTD.) 25 June 1990 (1990-06-25)<br>claims, examples, table 1-1 | 1, 4, 7-10, 12-14,<br>16-29, 32-33, 35, 37 |
| A | | 2-3, 5-6, 11, 15,<br>30-31, 34, 36 |
| X | JP 59-116147 A (OBARA KOUGAKU GLASS SEIZOUSHIYO KK) 04 July 1984<br>(1984-07-04)<br>claims, examples, tables -1 | 2, 4, 6-10, 12-16, 18-29 |
| A | | 1, 3, 5, 11, 17, 30-37 |
| X | JP 2023-512885 A (TAISHAN FIBERGLASS INC. ) 30 March 2023 (2023-03-30)<br>claims, paragraphs [0002], [0026], [0033]-[0037], table 2 | 3-31, 34, 36 |
| A | | 1-2, 32-33, 35, 37 |
| X | JP 2000-187828 A (OHARA INC.) 04 July 2000 (2000-07-04)<br>claims, tables 3-4 | 3-16, 18-25, 27-29 |
| A | | 1-2, 17, 26, 30-37 |

Form PCT/ISA/210 (second sheet) (July 2022)

## INTERNATIONAL SEARCH REPORT
### Information on patent family members

| International application No. |
| --- |
| **PCT/JP2024/020548** |

| Patent document cited in search report | | | Publication date (day/month/year) | Patent family member(s) | Publication date (day/month/year) |
| --- | --- | --- | --- | --- | --- |
| JP | 07-172863 | A | 11 July 1995 | (Family: none) | |
| JP | 01-028249 | A | 30 January 1989 | (Family: none) | |
| JP | 61-163696 | A | 24 July 1986 | US 4943470 A claims, table 1 | |
| JP | 59-137341 | A | 07 August 1984 | (Family: none) | |
| JP | 57-027945 | A | 15 February 1982 | US 4287260 A claims, examples, table II | |
| JP | 63-050345 | A | 03 March 1988 | (Family: none) | |
| JP | 02-164741 | A | 25 June 1990 | (Family: none) | |
| JP | 59-116147 | A | 04 July 1984 | US 4501819 A claims, examples, table 1 | |
| JP | 2023-512885 | A | 30 March 2023 | EP 4276080 A1 claims, paragraphs [0002], [0027], [0032], table 2 WO 2022/148275 A1 CN 112624620 A KR 10-2022-0107238 A | |
| JP | 2000-187828 | A | 04 July 2000 | US 2001/0016552 A1 claims, tables 2, 4 JP 2000-185940 A US 6245411 B1 EP 939395 A1 EP 939396 A1 CN 1228396 A CN 1228395 A KR 10-1999-0072857 A KR 10-1999-0072858 A | |

Form PCT/ISA/210 (patent family annex) (July 2022)

**REFERENCES CITED IN THE DESCRIPTION**

**Patent documents cited in the description**

- JP 2011105554 A

- WO 2012104999 A1